Europäisches Patentamt

European Patent Office

Office européen des brevets

(19)

(11) Publication number: **0 287 310**
**A2**

(12) # EUROPEAN PATENT APPLICATION

(21) Application number: **88303237.7**

(22) Date of filing: **12.04.88**

(51) Int. Cl.⁴: **G06F 15/40**

(30) Priority: **16.04.87 US 39194**

(43) Date of publication of application:
**19.10.88 Bulletin 88/42**

(84) Designated Contracting States:
**BE CH DE ES FR GB IT LI NL SE**

(71) Applicant: **WESTINGHOUSE ELECTRIC CORPORATION**
**Westinghouse Building Gateway Center**
**Pittsburgh Pennsylvania 15222(US)**

(72) Inventor: **Butler, Diane Marie**
**P.O. Box 157**
**Manor, PA 15665(US)**

(74) Representative: **van Berlyn, Ronald Gilbert**
**23, Centre Heights**
**London, NW3 6JG(GB)**

(54) **Intelligent query system.**

(57) An intelligent query system is disclosed which operates in a personal computer (12) and which can query a mainframe computer (10) and its database. The system acts as a front end processor for the mainframe computer database (26) by, interactively with a user, building a query for a search with a parser that interprets the user's natural language domain limited query using a general purpose dictionary (16) and a replaceable domain (18) dictionary. If the query generated is sufficiently limited or narrow, an abbreviated database (22) located in the personal computer (12) can provide the answer without occupying the mainframe computer (10). If the query is broader in scope, the query is answered by the mainframe computer (10). During query formulation, the system offers guidance through expert system (42) feedback helping the user to clarify and refine the query and allows the user to define new words.

FIG. 1.

## INTELLIGENT QUERY SYSTEM

The present invention is directed to an intelligent query system and, more particularly, to a user interactive system operating in a personal computer, used as a front end for a mainframe computer database search, utilizing a versatile word parsing program to interpret a user's natural language like query, providing preliminary search results from an abbreviated database and extended search results from the mainframe computer database, and when necessary, offering guidance through expert system feedback, permitting the user to clarify and further define the query.

In today's society, computers are constantly increasing in versatility and importance and it is imperative that this tool made available not only to those with previous computer experience and/or computer programming experience but also to those considered to be illiterate in computer technology and thus, easily intimidated by the thought of communicating with a computer. Rather than required people to learn a fixed set of rigid requirements for computer usage, means should be provided which will allow the computer to adapt and accommodate various users with varying approaches to requesting a search. The high cost of mainframe computer time dictates that a means of mainframe database searching be provided for a user to interface with the mainframe database only when essential, and with adequate preparation.

A principal object of the present invention to provide a query system and method that formulates a query suitable for database searching from variable format sentences.

With this object in view, the present invention resides in an intelligent query system method for a system having an abbreviated database, a database manager for the abbreviated database, a mainframe database and a mainframe database manager for the mainframe database, said method characterized by the steps of: (a) parsing an input query and identifying one or more phrases in the query to produce an identified phrase query; (b) applying the identified phrase query to the database manager; (c) applying the identified phrase query to the mainframe database manager if requested by the user; and (d) providing search results to the user.

The invention also resides in an intelligent query system coupled to a mainframe computer system including a mainframe database manager for conducting a search of a mainframe database, and a microcomputer system coupled to the mainframe computer system, characterized by said microcomputer system including: a microcomputer system coupled to the mainframe computer system, said microcomputer system including: an abbreviated database which is an abbreviation of the mainframe database; database manager means for searching said abbreviated database with a search query; a general phrase dictionary database; a domain dictionary database; and query analysis means for using the general and domain dictionary databases to identify one or more phrases in an input query to produce the search query, applying the search query to said database manager means, applying the search query to said mainframe database manager if requested by a user and providing the results to the user.

Important advantages can be attained by an intelligent query system operated in accordance with the invention in a personal computer that can query a mainframe computer and its database. The system interactively acts as front end processor for the mainframe computer database by building a query for a search using a parser to interpret the user's natural language-like domain limited query using a domain dictionary and a general purpose dictionary. If the query generated is sufficiently limited or narrow, a local abbreviated database stored in the personal computer can provide the answer without occupying the mainframe computer. If the query is broader in scope, the query is answered by the mainframe computer. During query formulation, the system offers guidance through expert system feedback helping the user to clarify and refine the query.

These together with other objects and advantages which will be subsequently apparent, reside in the details of construction and operation as more fully hereinafter described and claimed, reference being had to the accompanying drawings forming a part hereof, wherein like numerals refer to like parts throughout.

The invention will become more readily apparent from the following description of a preferred embodiment thereof as shown in the accompanying drawings, wherein:

Fig. 1 is a block diagram of the present invention as it would be coupled to a mainframe computer 10;

Fig. 2, including Figs. 2A-2C, is a flow chart showing the general operation of the present invention;

Fig. 3 is an example of a general purpose dictionary for common words used in a sentence;

Fig. 4, including Figs. 4A-4C, is an example of a jargon dictionary;

Fig. 5, including Figs. 5A and 5B, is an example of an abbreviated catalog;

Fig. 6, including Figs. 6A-6D, is an example of a mainframe computer database;

Fig. 7, including Figs. 7A and 7B, is a detailed flow chart of the operation of the present invention;

Fig. 8 is a flow chart of the parse function 106 of Fig. 7;

Fig. 9 is a flow chart of the function 142 of Fig. 8 which identifies the query parts;

Fig. 10 is a flow chart for the function 144 of Fig. 8 which resolves ambiguities;

Fig. 11 is a flow chart for the function 146 of Fig. 8 which resolves unknown words; and

Fig. 12 is a flow chart of the function 114 in Fig. 7 which outputs results and provides helpful hints.

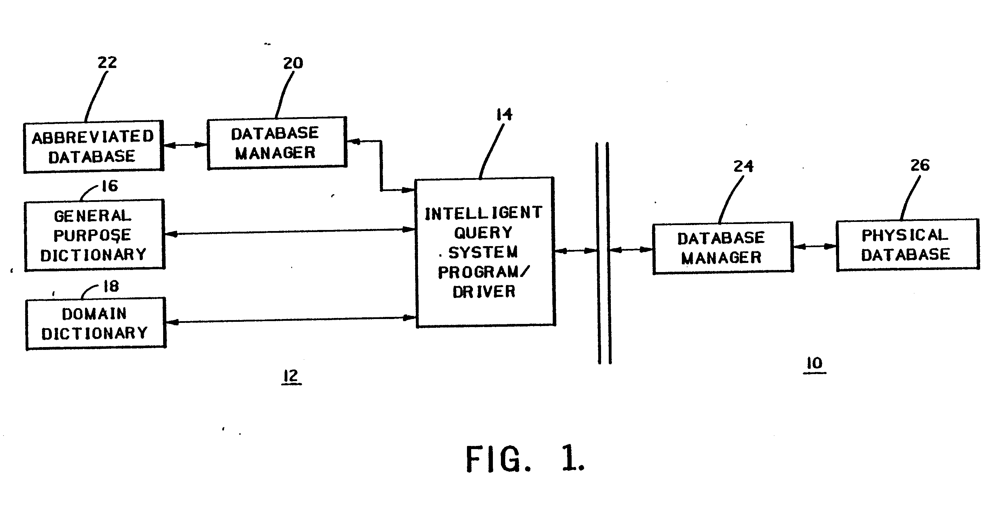

The present invention is an intelligent query system which should be part of a database query system used for accessing a mainframe database and is particularly suited for the distribution of information for computer-based training software. The system, as it would appear when coupled with a mainframe computer 10 is depicted in Figure 1. The intelligent query system resides in a personal computer 12 and includes the intelligent query system program or driver 14 which accesses a general purpose dictionary 16 and a domain dictionary 18 to interpret a user's natural language like query. The general purpose dictionary 16 includes not only definitions of commonly used words and phrases (facts) but the rules (facts) which the driver 14 uses to interpret the user's query. The domain dictionary 18 is a replaceable dictionary which contains the definitions of jargon words that are important in the domain of the search and any special rules (facts) needed to interpret queries in the domain.

Once the query is interpreted, if it is limited in scope, a local database manager 20, such as a D-base II database management program or a Sequel database management program or a manager written in the same language as the driver 14 uses the query to obtain the desired information from an abbreviated database 22. If the query is sufficiently broad in scope such that an answer is not possible from the abbreviated database, the intelligent query driver 14 applies the query to a database manager 24, such as D-base II or Sequel, which accesses the physical database 26 in the mainframe computer. The personal computer is preferably a system such as an IBM PC/AT, having at least 512 bytes of memory. The preferred language or driver/inference engine for the intelligent query system is MICRO-PROLOG. A suitable version is Micro Prolog Professional 3.1 available from Logic Program Associates, Ltd., Trinity Road, London. Other list processing capable type languages such as LISP are also suitable languages.

The intelligent query system is an interactive personal computer arrangement used as a front end for a mainframe computer database search utilizing a versatile word parsing program to interpret a user's natural language like query, providing preliminary search results from an abbreviated database, and when necessary, offers guidance through expert system feedback, permitting the user to clarify or refine the query. Not only is this arrangement beneficial to users with little computer experience, but it also shifts computer time for developing and processing an effective query from the mainframe computer to a more available, less expensive personal computer.

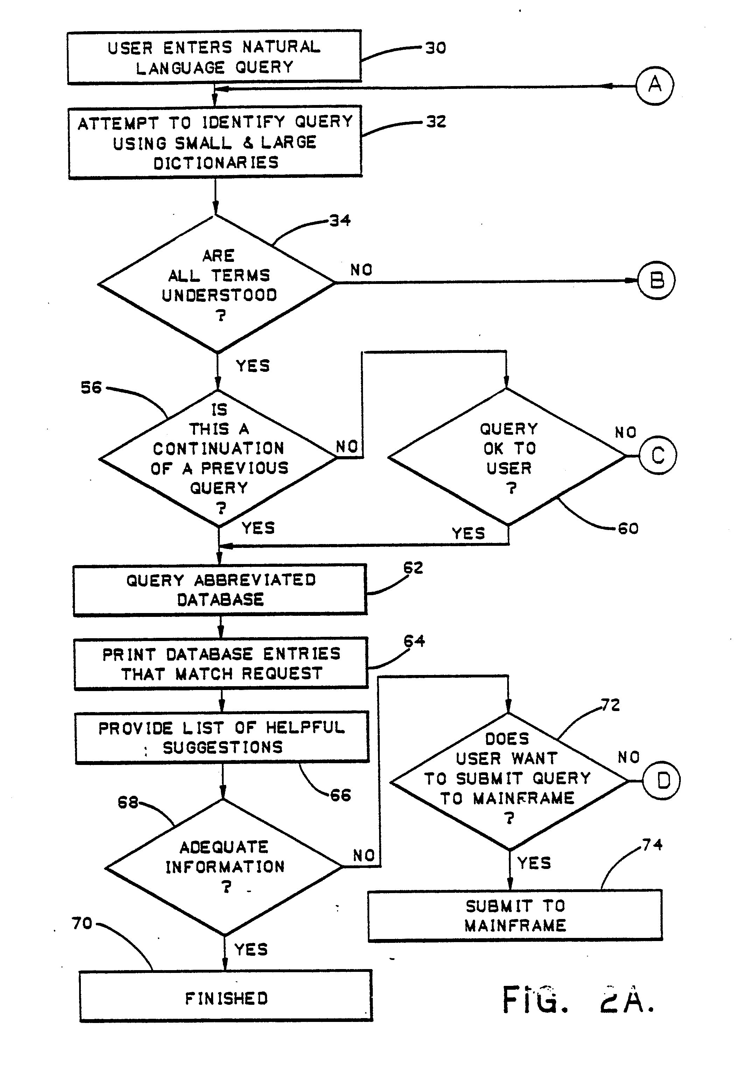

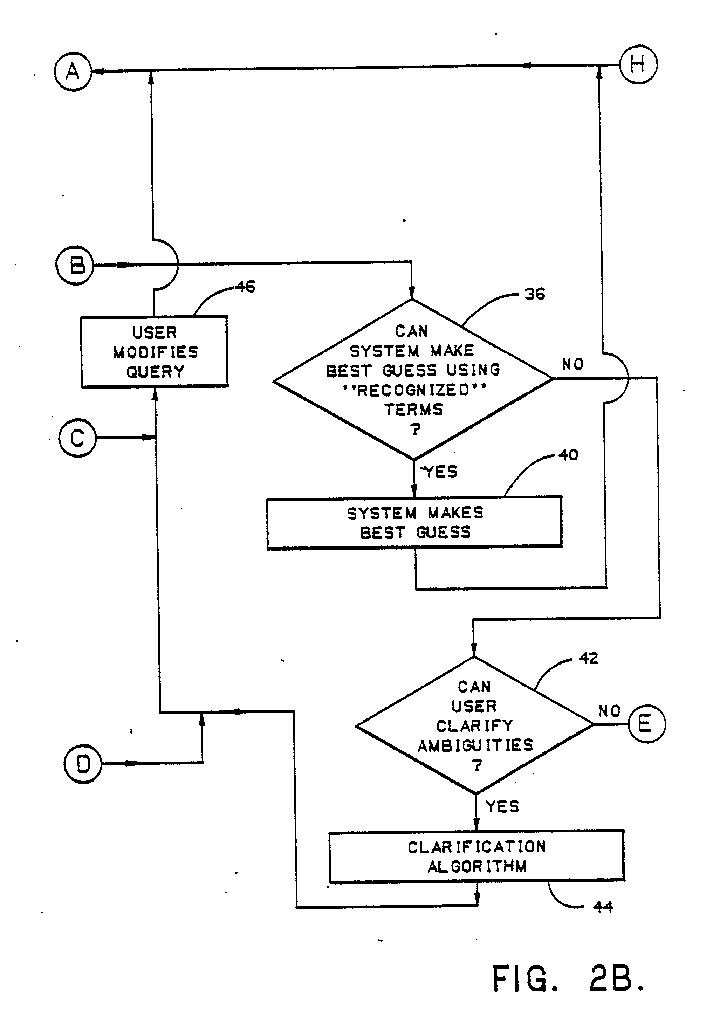

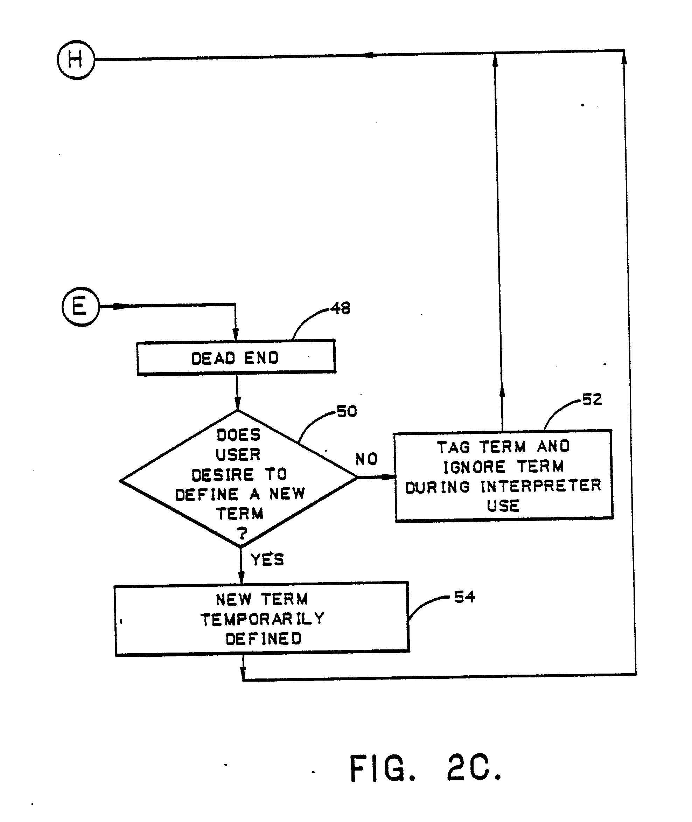

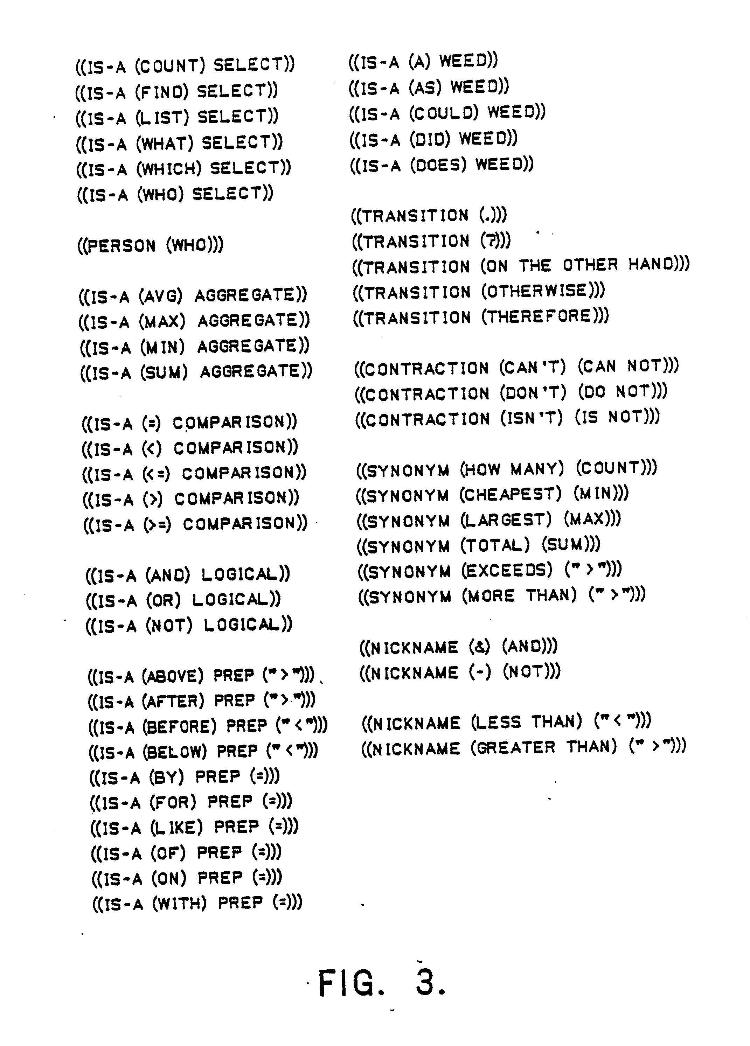

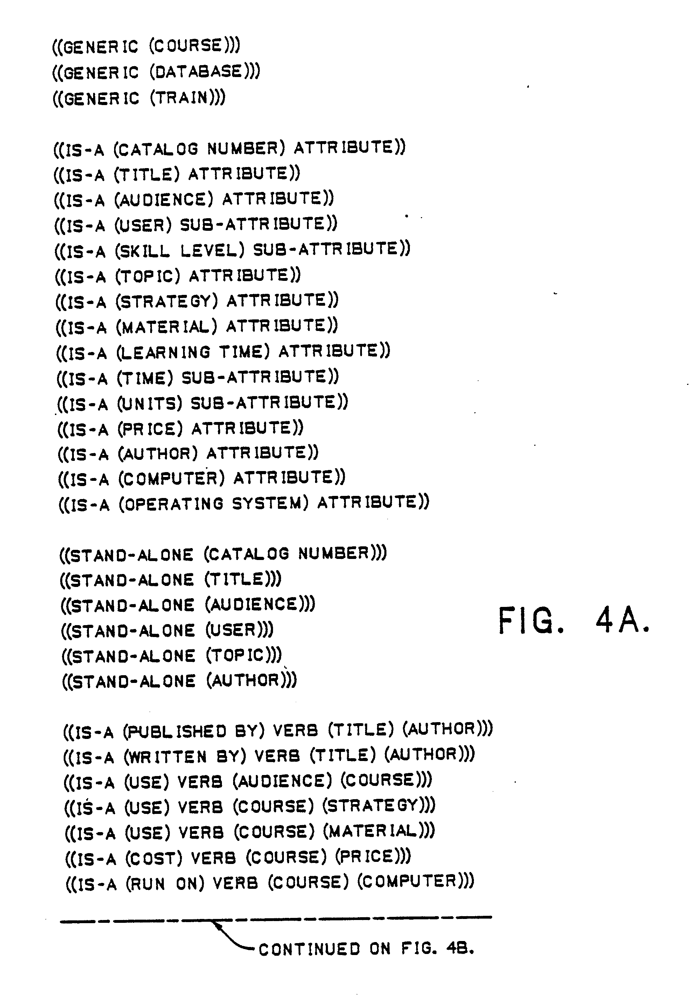

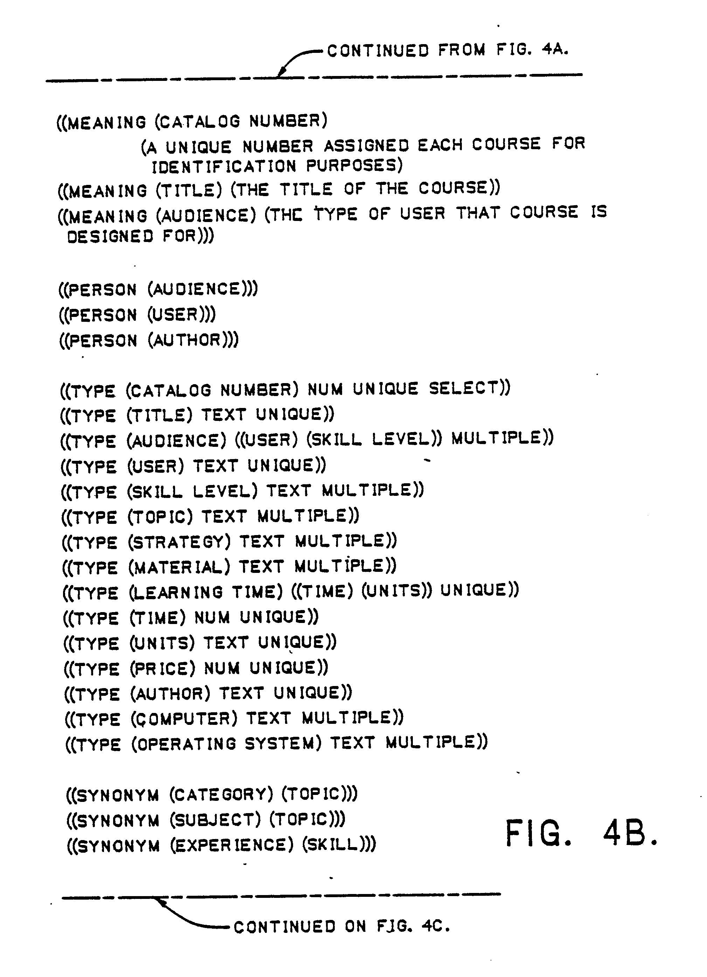

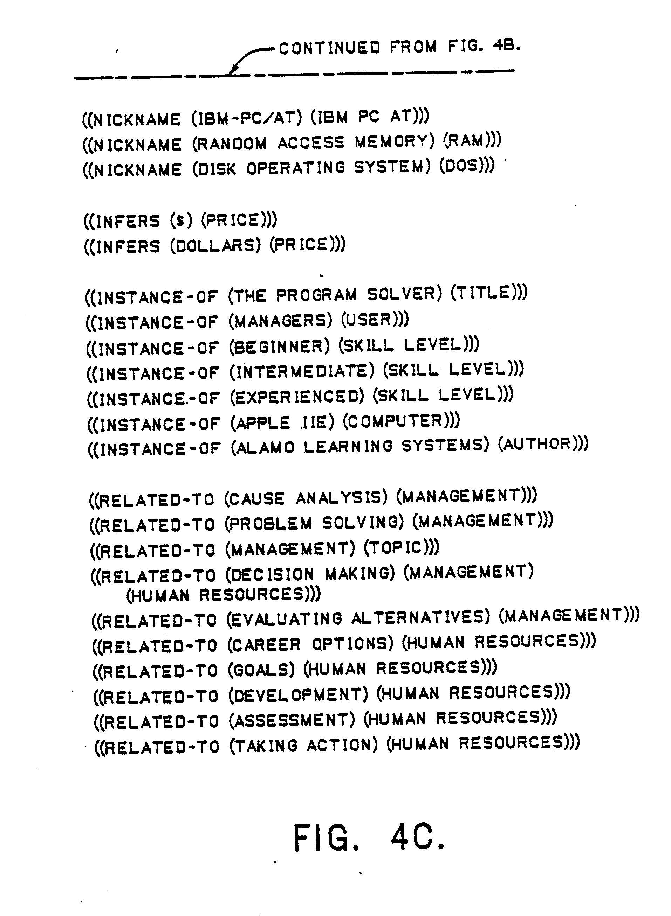

Fig. 2 shows a generalized flowchart of the intelligent query system. The user enters 30 a query consisting of a natural language like sentence which is then submitted 32 to an interpreter. The interpreter interprets the query by comparing it to a series of anticipated phrases and key words. These words and phrases are found in one of two interpreter databases the general purpose 16 and domain 18 dictionaries. The small general purpose dictionary (see Fig. 3) contains common words that could be used in any sentence (i.e., prepositions, pronouns,....). The large domain diction 18 (see Fig. 4) contains a plurality of words unique to a specific field of interest (i.e., jargon in a certain field). As an example of this, one use of this system would be to develop a concise query for use in a mainframe computer search of a collection of computer based training courses. Words such as "apple" and "user" would have different meanings outside of this field or domain. Through the use of these dictionaries, the query is checked 34 to insure the words and format will be compatible for a search of the mainframe computer database.

A distinct advantage of this arrangement is that the domain dictionary, which includes jargon, may be replaced with another dictionary so that any subject matter may be addressed solely by changing to a related domain dictionary.

If all of the query words/phrases are not included in these two dictionaries, then the program branches to determine 36 if the system can guess what the user means, where, if any, terms can be recognized, the system makes a best guess 40 using the recognized words. The system will also make useful suggestions in an attempt at clarifying ambiguities. The system makes a best guess only for one unrecognized word at a time and then recycles to step 32 until best guesses are made for each previously unknown word (i.e., the 32, 34, 36, 40, 32 loop is followed). As an example, a query could request a course authored by Mr. X. Although Mr. X would not be recognized in the dictionaries, the remainder of the query suggests that Mr. X may be an author's name and consequently, the best guess algorithm, through examination of the remainder of the query, would guess that Mr. X is an author.

If none of the terms are clearly understood by the system, then there will be no information from which a best guess can be based and the program branches to attempt clarification of the query. The system incorporates an expert system 42 to anticipate ambiguities and direct questions to the user regarding three types of possible errors. Certain words are inherently ambiguous in that a given word may have a multitude of definitions (i.e., "BASIC" could describe the computer language or could be synonymous with "fundamental"). A second type of anticipated error would involve a query that is too general (i.e., IBM could relate to PC's, computer languages...). In each of these two cases, the program branches to where the ambiguity is highlighted 44 by the program and user input is requested. After the user's intention is clarified, the query is modified 46 using the input and the query again is submitted to the interpreter 32.

Another anticipated error is a "dead end" 48. Here a word in the query is not recognized at all and cannot be identified by any other words/phrases in the query, that is, it is not a question of an ambiguous or general term. The program first asks 50 the user if this unrecognized term is significant enough that it should be defined. If not, then the term is tagged 52 as a weed word, so that the interpreter will deliberately ignore it. If the term is significant, then the program presents a fixed menu-driven multiple choice sequence to pinpoint its meaning. When a term is "defined" 54 through this method, the definition will exist for the duration of the user session and also be accumulated with information from other sessions so that if inspection reveals frequent word relationships, the dictionaries will be modified accordingly. This fixed menu is only presented as a last resort because the goal of the intelligent query system is to accept natural language queries. When the term is defined 54 or tagged 52, the query will again be presented 32 to the interpreter. This clarification process will occur once for every term that is not completely understood by the interpreter.

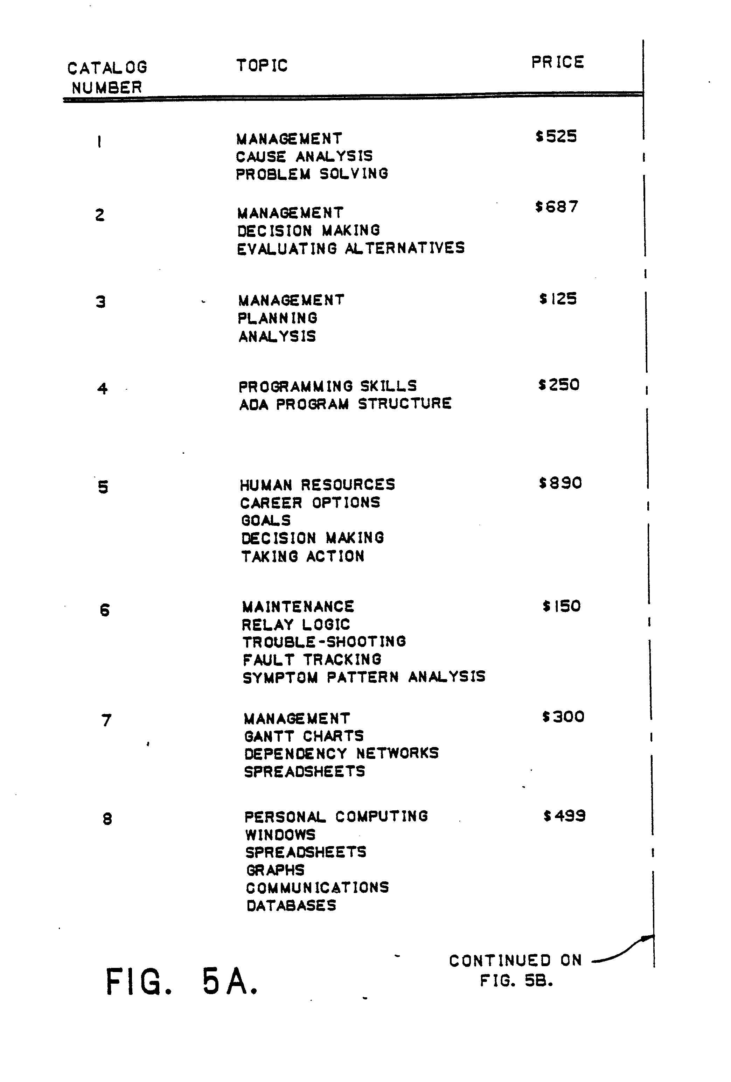

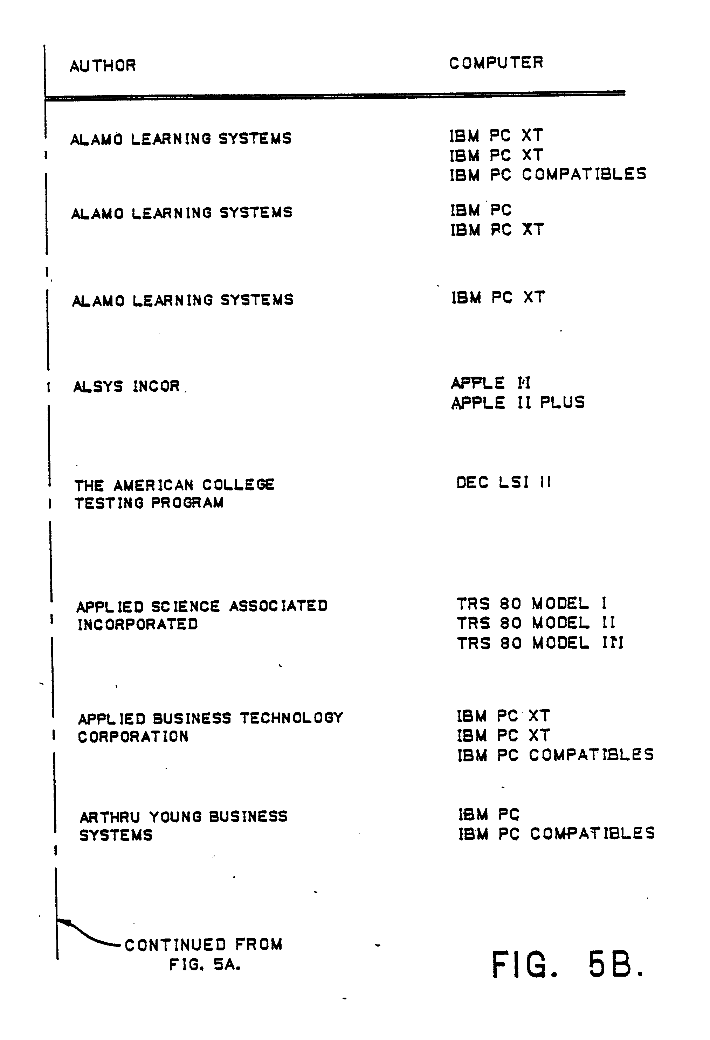

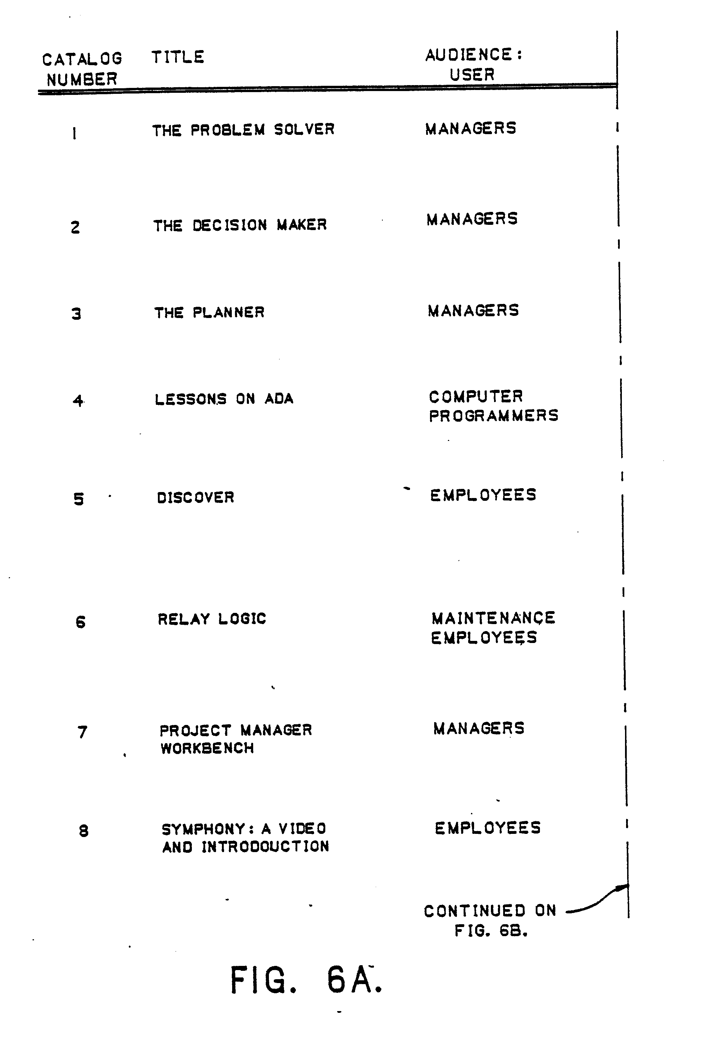

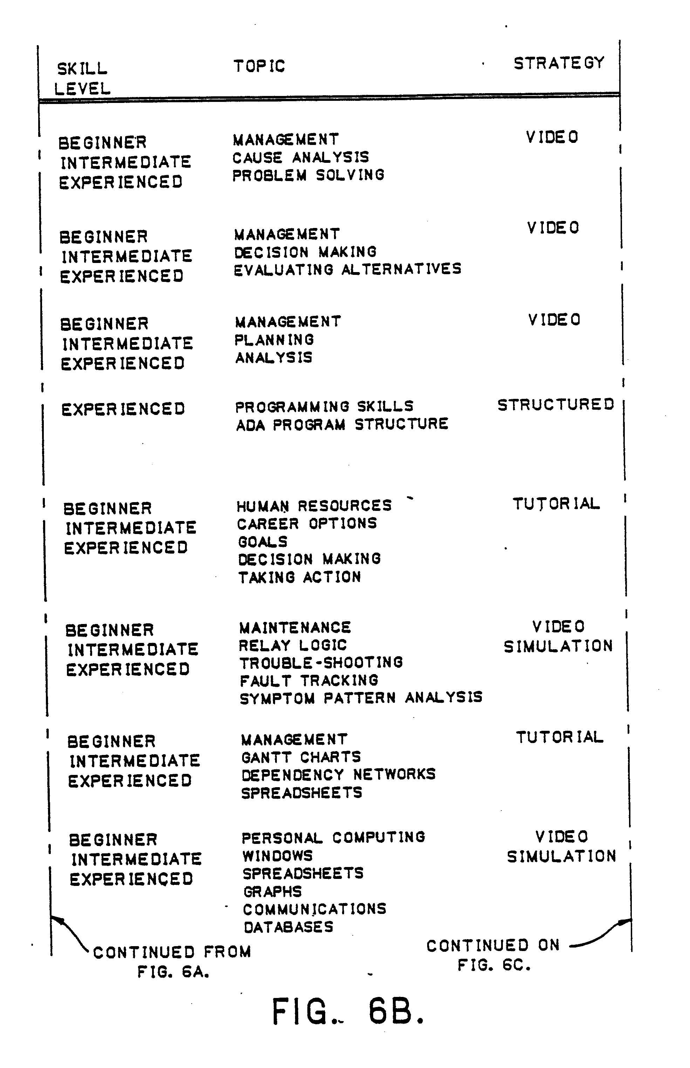

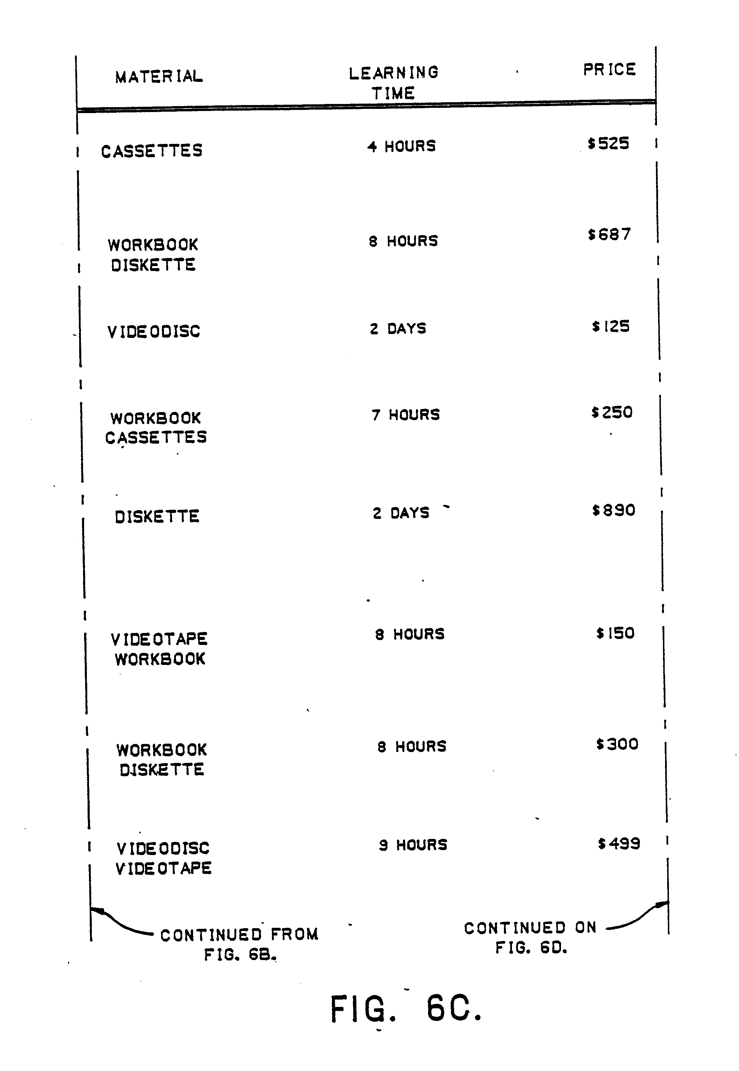

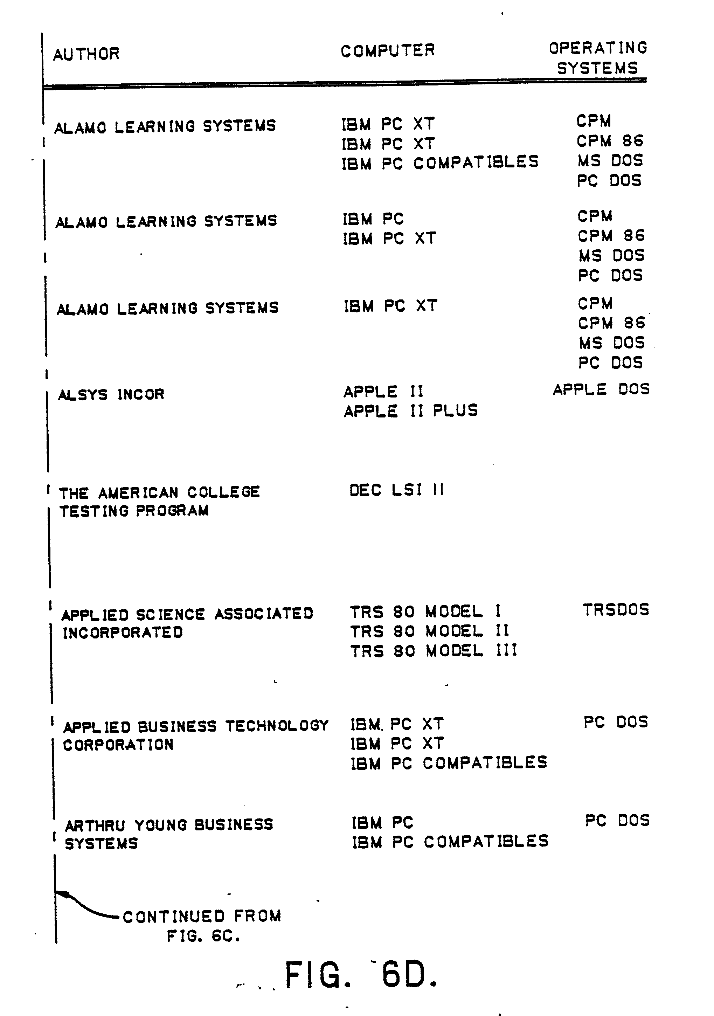

Up to this point, the system has only been used to examine and modify a user query for maximizing effectiveness in the search of a mainframe database. No indication of the success of the search has been provided. Typically, the use of a mainframe computer to search a database indicates an enormous size for the database. Furthermore, it is fair to say that until a user has narrowed a search down to a handful of entries, he is interested in examining only cursory information about each entry. Consequently, it becomes possible to glean this cursory information from the mainframe database and include such an abbreviated data (see Fig. 5) in storage of the user's personal computer. In conjunction with the interpreter/expert system, the abbreviated catalog may be used to provide to the user an indication of the mainframe database contents. Assuming the mainframe database contains information on computer based training courses, the abbreviated catalog could contain the subject, author and price, as depicted in Fig. 5. This sort of information may be all the user is interested in and in that sense, the abbreviated catalog may be used to displace the need to examine the mainframe database. More likely, the user will require more detail and it will be necessary to access a mainframe database, as depicted in Fig. 6, and just as with the interpreter/expert system, the abbreviated catalog could be used to refine an already acceptable query.

At this point, the query terms are understood by the interpreter and the program now screens 34 a query that is acceptable to the interpreter the first time through to determine 56 whether it is a continuation of a previous query, if not, it verifies 60 that it is the query intended by the user. If it is not acceptable, the user may modify 46 the query. If it is acceptable, the system then proceeds to submit 62 the query to the abbreviated data base. The same action would occur if the query was a continuation of a previous query (i.e., already modified and clarified). After searching the abbreviated catalog, the program provides the user 66 with all of the information relevant to his query. Furthermore, related catalog items are included which is especially helpful if no item exactly satisfies the query. For example, rather than tell the user "no matches" and leave him without options, the program will show a list of items that approximate the query, such as a list of courses costing less than 600 when the query searched for those under 550, and from this, the user gets a feel for the selection of items in which he may actually be interested. This abbreviated catalog information may be sufficient 68 to completely satisfy the user's need and, if so, the user is finished 70. If more information is desired 72, the user may either edit the existing query, or, if the query is acceptable, submit 74 it for processing by the mainframe computer. A query submitted to the mainframe will provide detailed descriptions of items found in the mainframe catalog.

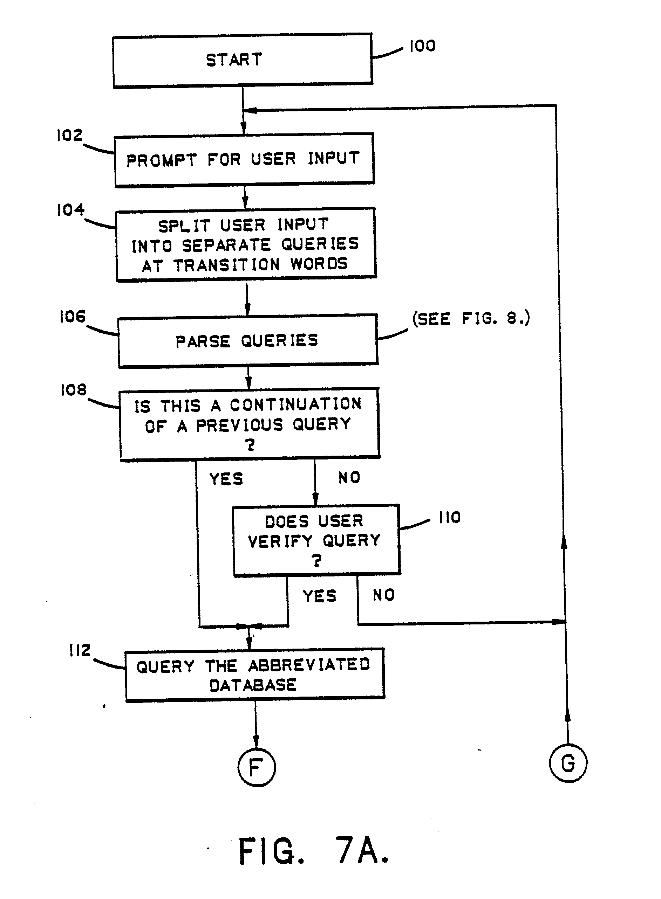

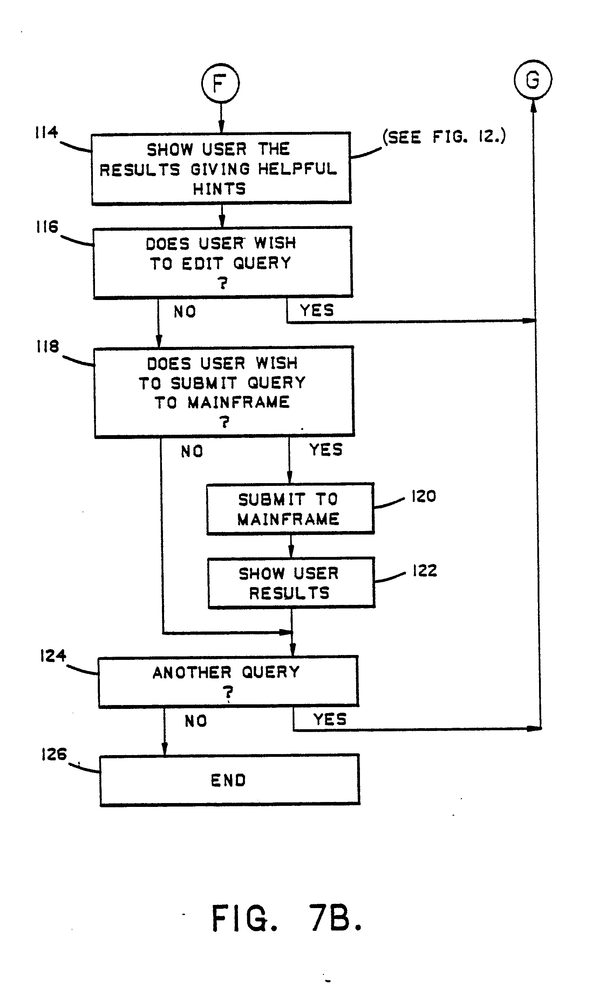

After the personal computer is booted up, the system prompts 102 the user for an input, as illustrated in Fig. 7. A typical rule and predicates for performing a prompt would be as follows: (PP Enter your training need:) (read_answer) No files are used for input/output. All input references are in lists added to local memory. The input can be, for example, the two sentences "I need a course on management." or "I need another course on the IBM computer". The queries would arrive from the user one word at a time and be placed in a list or string by Prolog code as set forth in Appendix Ia which reads the user input and puts it in a list.

Another possible method of reading a sentence is to link Prolog with a program written in the C programming language and use C function calls to do the input/output. This method will operate much faster.

Any input that includes more than one query is split 104 or separated into separate queries at transition words. The transition words, defined in the general purpose dictionary 16, can be punctuation, such as periods or words such as "therefore" and "on the other hand". For example, given the following fact in the general dictionary 16: ((Transition (.))) and given the input sentence" (I Want A Management Course. It Should Run On An IBM.). Assuming we have already processed the sentence up to the first period, in which case our current sentence looks like:

(. It Should Run On An IBM.)

The rule is:

```
((split-into-phrases ((_word|_more) _more) ())
 (TRANSITION (_word))
 /)
```

Following along with the current sentence, we have:

```
((split-into-phrases ((. IT SHOULD RUN ON AN
IBM)
                       (IT SHOULD RUN ON AN   IBM))
())
        (TRANSITION (.))
        /)
```

The technique used above is called difference lists and a person of ordinary skill in the art would be familiar with this technique. Basically, what is needed is the difference between the entire list and the part of the list that does not fit the rule that we are currently examining. In other words, what the rule returns is 1) the part of the list that makes the rule succeed and 2) the rest of the list.

For example, if the system is checking to see if the next word is a pronoun in the sentence "I Want A Management Course.", then what comes back from the rule is the pronoun "I" and the difference between the pronoun and the entire sentence, which is "Want A Management Course.". The code looks like Appendix lb. Remember, the system is starting with the entire user input and parsing it at TRANSITION points, or splitting it up into its logical phrases.

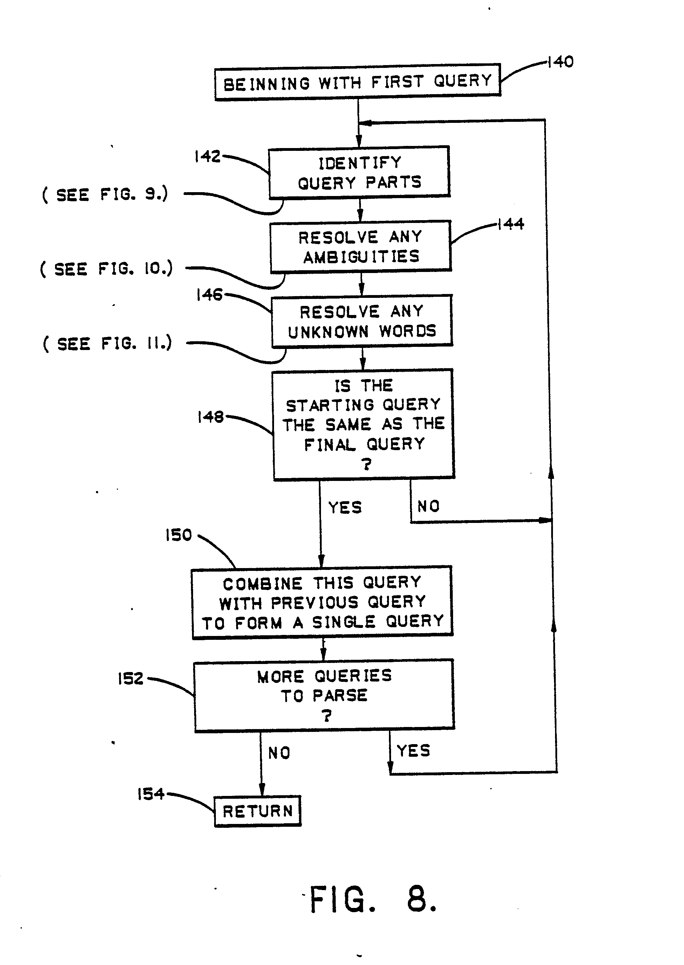

When the queries are separated, they are parsed 106, the details of which will be discussed with respect to Fig. 8. Next, a determination 108 is made as to whether the current query is a continuation of a previous query. That is, the system determines whether the user is asking questions about the prior answer provided from the database. To determine whether the current query is a continuation of a previous query, the following rules are followed:

```
o  if there is not a previous query recorded
      o  this is the first query asked or a
         restart - NEW QUERY
o  if there was an old query recorded
      o  if there is at least 1 criteria on the
         new query that is also on the old query
            o  this is a continuation of the old
      query - OLD QUERY
   else this is a NEW QUERY
```

The above rules would appear in Prolog as in Appendix lc.

If it is not a continuation of a previous query, the user is asked to verify 110 the query. In the above example, for the management course request, the computer could respond with "You want a course in which the topic is management. Shall I query the database with this strategy?" The code which would accomplish this task is set forth in Appendix ld.

If the user responds "No", the computer would come back and request that the user indicate what is wrong or missing from the query using codes such as those in Appendix le.

In this example, the user could respond with "The course should run on an IBM computer and cost less that 1,000". A modified query would result and the database manager 20, would query 112 the abbreviated database of Fig. 5. The query passed to the database manager 20 has the form ((Query ((Select words)) (-

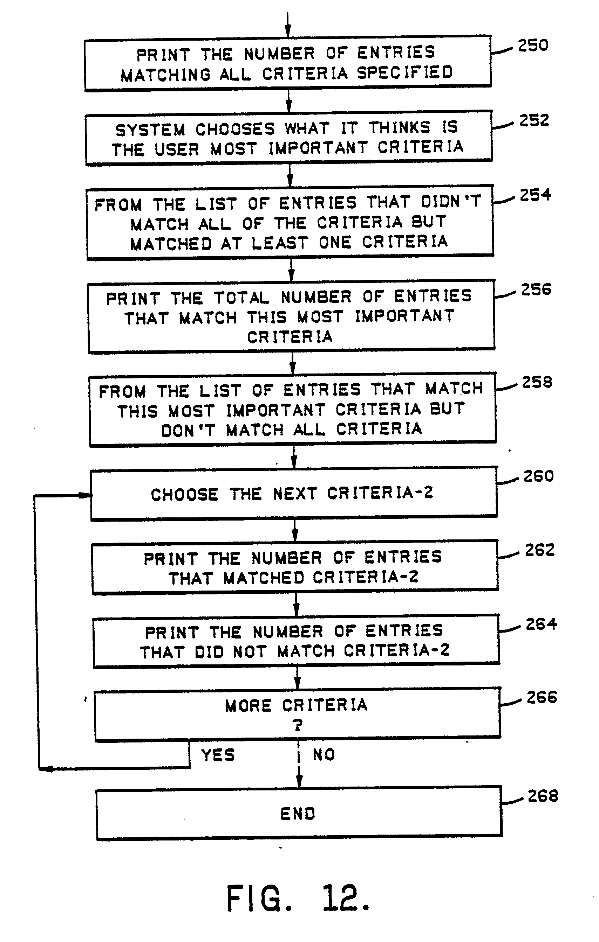

(Criteria)))). As a result, the system would output 114 the courses which satisfy the criteria in which the topic is management, the computer is an IBM PC/AT and the price is less than 1,000. That is, the computer would display the information provided in catalog entries 1, 3 and 10 of Fig. 5. In addition, the user would be shown additional information in the form of helpful hints, the details of this function will be discussed with respect to Fig. 12. For example, the computer would indicate that one additional course has the topic of management and that the computer used could for the course be an IBM PC or an IBM PC/XT (corresponding to the catalog entry number 8).

Next, the user would be asked 116 whether the query needs editing. If the user wishes to edit the query because the user wished to add information to or delete it from the query, the process would return to prompt 102 the user for additional information. The additional information would be added to the list of defined words of the previous query and the new list would be parsed. If the user does not wish to edit the query, the user is asked 118 whether the query should be submitted to the mainframe computer so that all information associated with the courses discovered, would be output. If so, the query is rearranged to suite the syntax of the particular database manager 24 and submitted 120 to the mainframe and the results are displayed 122 to the user. Once the results of the query are displayed, the process asks 124 the user whether another query needs to be satisfied. If so, the processor returns to prompt the user for the query. If not, the process stops 126.

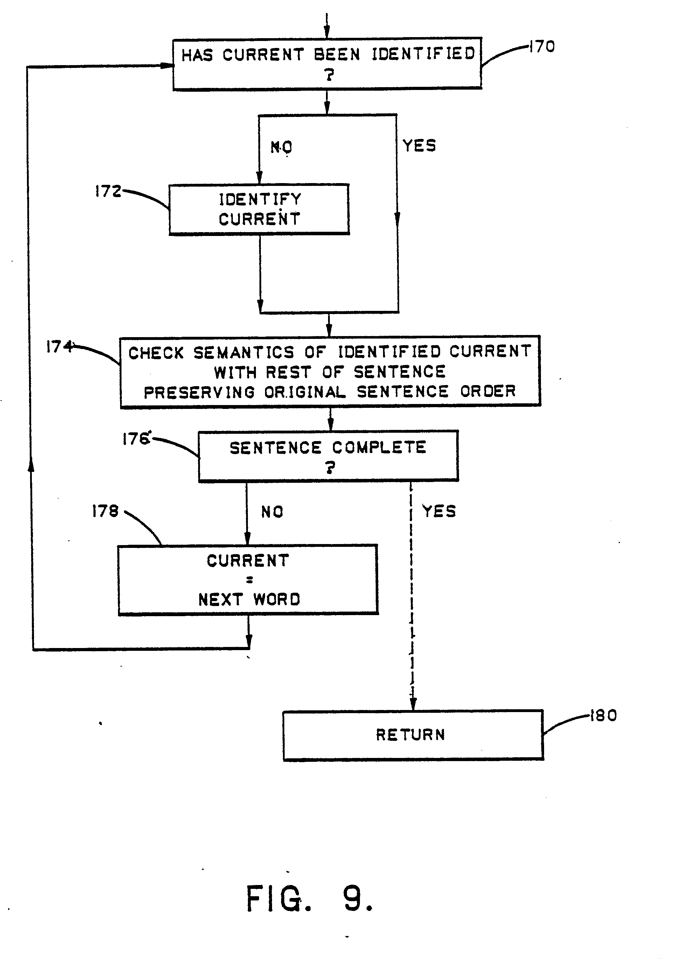

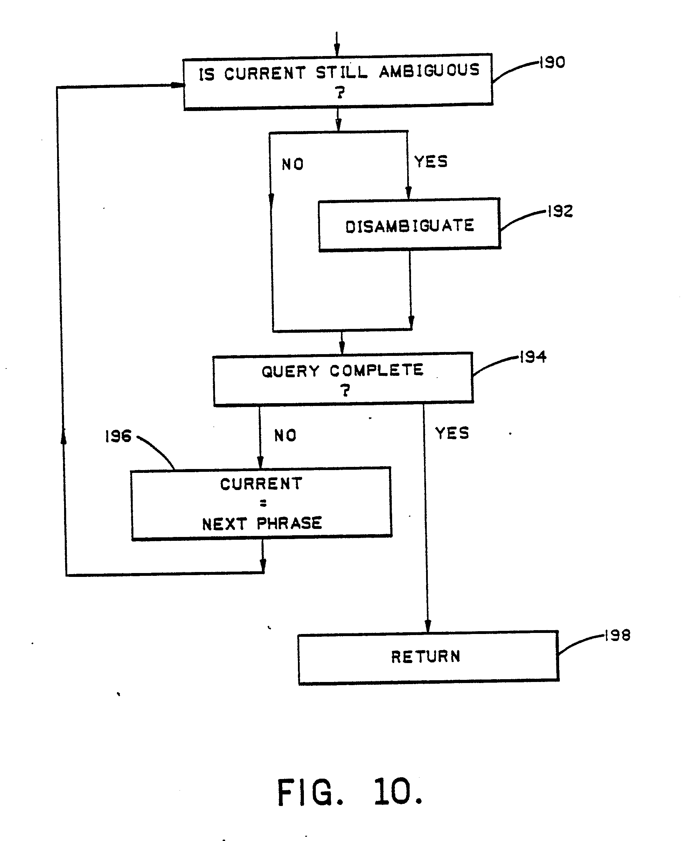

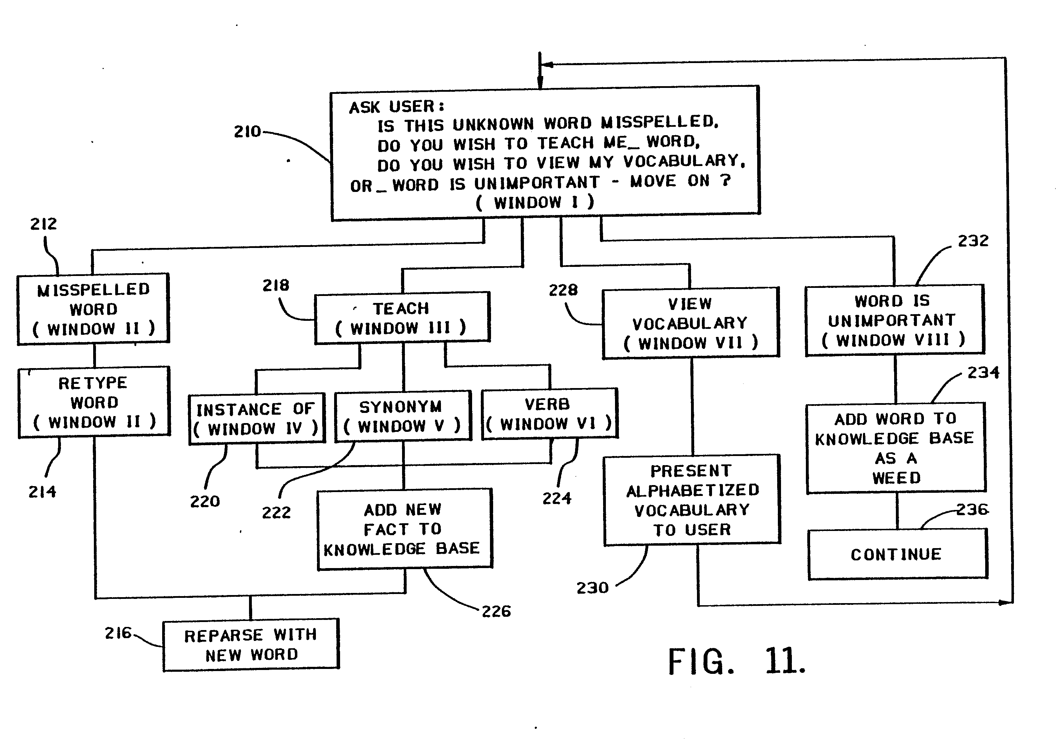

The parsing of the queries begins 140 with the first query, as illustrated in Fig. 8. Additional queries are parsed separately and the routine loops back or recurses for each additional query. In the loop, the first step is to identify query 142 parts or phrases which will be discussed in more detail with respect to Fig. 9. The following discussion of query parts uses the term "phrase" with the meaning intended to include traditional phrases of one or more words, punctuation and any combination of these that are used in the queries and which should be included in one of the two dictionaries. If the query phrase cannot be identified, the process attempts to resolve 144 any ambiguities in the query phrase which will be discussed in more detail with respect to Fig. 10. If the query phrase cannot be identified or the ambiguity in the phrase resolved, the system attempts to resolve 145 unknown phrases which will be discussed in more detail with respect to Fig. 11. Once the query has been examined from beginning to end, substituting in appropriate database items for resolved problems, the modified resolved query is compared 148 with the previous query to determine whether the query is the same. If the query is not the same indicating that one or more of the query phrases have been replaced by more definite substitutes, the query is examined again. If the query is the same, indicating that no further parsing is possible, the current query is combined 150 with any previous query to form a single query.

```
Sentence 1: I Need A Management Course.  is
parsed into the query

    ((Query ((Topic) (Catalog Number)) ((Attribute
    (Topic) (=) (Management))))))

Sentence 2: The Cost Must Be < $500.  is parsed
into the query

    ((Query ((Price) (Catalog Number)) ((Attribute
    .(Price) (<) (500)))))

combined, the query becomes:

    ((Query ((Topic) (Catalog Number) (Price))
    ((Attribute (Topic) (=) (Management))
    (Attribute (Price) (<) (500))
```

The process then determines 152 whether additional queries are outstanding and if so, loops back to process those queries one query at a time. If no unparsed queries are outstanding, the process returns 154. To identify the query parts, a determination is made as to whether the current query phrase, has been identified.

The process for identifying a query part begins by determining 170 whether the current phrase (the phrase in the list presently being examined) has been identified. If not, the current phrase is identified 172 in accordance with the following rules:

```
A:
  o if _phrase is a CONTRACTION for, NICKNAME
          of, or INFERS another _phrase2
      o replace _phrase with _phrase2
      o recurse back to A: to try to identify
```

```
                                _phrase2
              o if _phrase is found in our domain but in
                     more than 1 area
                        o return _phrase with all of the
                               possible areas it is RELATED to
              o if _phrase is found only as a part of 1 or
                     several domain phrases
                        o return _phrase with all of the
                               POSSIBLE domain phrases it could be
                               a part of
              o if _phrase is found in only one place in our
                     domain
                        o return _phrase with it's one meaning
              o if _phrase is a BOOLEAN (AND, OR, or NOT)
                        o return _phrase as a BOOLEAN
              o if _phrase is a WEED or a PREPOSITIONAL
                     PHRASE
                        o  throw out _phrase
                        o  get the next _phrase2 from the user
                               input sentence
                        o  recurse back to A: to try to identify
                               _phrase2
              o if _phrase is another type defined in the
                     ENGLISH dictionary (VERBs, AGGREGATEs,
                     COMPARISON signs, etc.)
                        o  return _phrase as that type
              o if _phrase is a number
                        o return _phrase as a number
              o if _phrase is GENERIC
                        o  throw out _phrase
                        o  get the next _phrase2 from the user
                               input sentence
                        o  recurse back to A: to try to identify
                               _phrase2
              o if _phrase is a SYNONYM of another _phrase2
                        o  replace _phrase with _phrase2
                        o  recurse back to A: to try to identify
                               _phrase2
              o if _phrase is in a plural form
                        o  find a singular form _phrase2 of
                               _phrase
                        o  recurse back to A; to try to identify
                               _phrase2
             'o if _phrase is in a singular form
                        o  find a plural form _phrase2 of
                               _phrase
                        o  recurse back to A: to try to identify
                               _phrase2



                 o  else return _phrase as UNKNOWN
```

An example for the third rule above on possible domain phrases would be written in PROLOG as illustrated in Appendix If.

What the system code does is the following. In the first line of the rule "is-a-topic" we have split the sentence into the current_word ore) of the sentence. The first Or primitive will check if this current_word is the beginning of either any Related-To clause or any Instance-Of clause in our domain. In this case, ! is a primitive meaning to only try to solve this clause once. If either clause in the OR statement succeeds, Prolog will continue to try to solve the rest of the clauses under is-a-topic. If the OR fails, is-a-topic fails. This OR is used so that the system does not end up with empty lists as Possible phrase matches. If the OR does succeed, the next step is to collect all of the possible (_word|_ph) combinations that appear in our domain dictionary in the Related-To and the Instance-Of clauses. The system then combines the two possible lists, _pos1 and _pos2, into one list _possible. Next, it checks to see if _word is also defined as an Attribute in our domain, in which case it is added to the possible list in _phrase. Otherwise, the _phrase returned is the _possible list. Therefore, the phrase (Possible (_word)| _phrase) is inserted into the sentence in place of _word, and _more is returned as the rest of the sentence to be identified. As a result, the phrase identified would be replaced with the phrase including an identifier.

Next, the semantics of the currently identified phrase is checked 174 against the remainder of the sentence list or string. The semantic checking is performed in accordance with the following rules:

```
A:
  o if _phrase is an AGGREGATE type (MAX, MIN,
    SUM, AVG)
        o  identify the next _phrase2
        o  if _phrase2 is of the same type as
           _phrase (these AGGREGATEs are only
           of type NUMBER)
  o  return to A: with _phrase2 as the object of
     phrase else the object of the AGGREGATE
     is undefined
  o if _phrase is an ATTRIBUTE of the database
        o  if there is an UNKNOWN _word coming
           before _phrase in the sentence
              o  ask the user if _word is the
                 _phrase
                    o  if YES, add this definition
                       to the knowledge base and
                       reparse with the new
                       definition
        o  if this ATTRIBUTE is redundant in the
           sentence
              o  remove this _phrase
        o  if this ATTRIBUTE was better described
           before in the sentence
              o  remove this _phrase
        o  if this ATTRIBUTE is well-defined (the
           attribute name, comparison sign, and
           value are defined; ATTRIBUTE PRICE <
           $300)
              o  if there is a BOOLEAN NOT before
                 this _phrase
                    o  negate the sign and recurse
                       to A: with the new
```

definition
o if this ATTRIBUTE has a value and was previously defined in the sentence with another value
   o combine both values with an AND and recurse to A: with the new definition
o if this ATTRIBUTE has a SUB-ATTRIBUTEs that was defined previously in the sentence
   o remove the previous SUB-ATTRIBUTE; this ATTRIBUTE is a better description; and recurse to A: to check for other semantic rules

o if _phrase is a COMPARISON _sign
   o if there is a _phrase2 coming up that is the same type as a previously defined _attribute
      o recurse to A: with the well-defined ATTRIBUTE _attribute _sign _phrase2

o if _phrase is a BOOLEAN NOT
   o if the next _phrase2 is a COMPARISON _sign
      o negate the _sign and recurse to A: with the new sign

o if _phrase is a BOOLEAN AND or OR
   o identify the next _phrase2
      if _phrase is an AND
         o if the previous _phrase3 and _phrase2 are conjunctive
            o combine _phrase3 and _phrase2 with an AND and recurse to A: with the new definition
      o if _phrase is an OR
         o if the previous _phrase3 and _phrase2 are conjunctive
            o combine _phrase3 and _phrase2 with an OR and recurse to A: with the new definition

o if _phrase is a NUMBER
   o if there is an _attribute defined before _phrase that takes a NUMBER for it's object a recurse to A: with the well-defined ATTRIBUTE _attribute = _phrase

```
                o  if the next phrase is an _attribute
                    that takes a NUMBER for its object
                  o  recurse to A: with the well-
                       defined ATTRIBUTE _attribute =
                       _phrase
          o  if _phrase has POSSIBLE domain phrases it
              could be a part of
                o  if one of the possibilities is that
                    _phrase is the name of an ATTRIBUTE
                      o  if that particular ATTRIBUTE was
                          defined before
                          o  _phrase is no longer
                              ambiguous so remove this
                              POSSIBLE _phrase from the
                              parsed query
                o  if there is an ATTRIBUTE defined
                    before this _phrase with a value
                    that is on this possibility
                    list
                  o  _phrase is no longer ambiguous so
                      remove this POSSIBLE _phrase
                      from the unparsed query
                o  if there are UNKNOWN words coming
                    before this _phrase that are on one
                    of the possible phrases
                      o  remove the matching UNKNOWN words
                          from the parsed query
                      o  remove this _phrase with it's
                          list of possible phrases
                      o  recurse to A: with this _one
                          phrase
                o  if something on the possibility list
                    are related to a previously defined
                    _attribute (ex:  we're not sure if
                    APPLE should be a fruit or computer
                    but we already defined that we're
                      looking for a computer)
                      o  let the user choose from among
                          these items and recurse to A: with
                          his answer
          o  if _phrase is an INSTANCE OF an ATTRIBUTE
              _att
                o  recurse to A: with the well-defined
                    ATTRIBUTE _att              = _phrase
          o  if _phrase is related to one domain area
                o  if the next word is GENERIC)
                    (ex: LIST THE MANAGEMENT COURSES; with
                      _phrase being MANAGEMENT and COURSES
```

11

```
                           being GENERIC)
                            o   throw out the generic word
                    o   recurse to A: with the well-defined
                            ATTRIBUTE (TOPIC) = _phrase
        o  if _phrase is RELATED to several domain
            areas
                o   if there is an _attribute defined
                    before this _phrase that is one of
                    these domain areas
                        o   combine the previous _attribute
                            and the matching domain area
                            with an AND and recurse to A:
                            with the new definition
        o  if _phrase is a PREPOSITION
                o   recurse to A: with the _phrase acting
                    as a COMPARISON with the
                    prepositions's associated _sign
        o  if _phrase is a SUB-ATTRIBUTE
                o   check semantics with _phrase using the
                    ATTRIBUTE rules and replacing
                    ATTRIBUTE with SUB-ATTRIBUTE
        o  if _phrase is an UNKNOWN word
                o does an _attribute without a defined
                    value appears before this _phrase
                        o   ask user if this _attribute =
                            this _phrase?
                        o   if YES, add this fact to the
                            knowledge base and recurse to
                            A: with the new definition
                o   can this _phrase help define an
                    ambiguous          _phrase2 that comes
                    before it (a _phrase2 that
                    is either part of a list of POSSIBLE
                    phrases or RELATED to several
                    phrases)
                        o if YES, remove this UNKNOWN
                            _phrase2 and recurse to A: with
                            the new definition
```

```
        o  if an _attribute without a value comes
              before this _phrase
                 o  if the _attribute has verbs
                       associated with it
                          o  ask the user if _phrase is
                                the object of one of these
                                verbs
                                   o  if YES, add this fact to
                                      the knowledge base
                                      and recurse to A: with the
                                      new definition for the
                                      _attribute
     o  if _phrase is a VERB
           o  if this VERB has only 1 object pair
              (doer/receiver of the action)
                 o  recheck semantics with the doer,
                       then the receiver added to the
                       sentence at this point
           o  if this VERB has > 1 object pairs
              (doers/receivers)
                 o  is there a defined _attribute
                       coming before his _phrase that
                       is ONE of these 'doer's?
                 o  add this doer/receiver pair to
                       the sentence and recurse to A:
                       to recheck semantics
                 o  are there SEVERAL defined
                       _attributes coming before this
                       _phrase that are doer's?
                          o  ask user to choose the
                                doer/receiver pair
                          o  add chosen pair to the
                                sentence and recurse to A:
                                to recheck semantics
           o  is there a defined PERSON coming
              before this _phrase that is a doer?
                 o  repeat B using _person in place
                       of _attribute
           o  is there is defined NON-PERSON (THING)



              coming before this _phrase that is a
              doer?
                 o  repeat B using _non-person in
                       place of attribute
           o  identify the next _phrase2 from the
              sentence and follow C rules checking
              _phrase2 against the receiver of the
              doer/receiver object pairs
           o  (last resort) ask the user to choose
              the doer /receiver pair that applies
              and recheck semantics with the pair
              that they chose
     o  OTHERWISE return the _phrase as defined
```

Once the semantics of the current phrase are checked a determination 176 is made as to whether all of the phrases in the sentence have been identified and semantically checked. This occurs when the end of the list or string is encountered. If not the current phrase becomes 178 the next phrase in the sentence moving left to right and the loop is processed again. That is, the pointer to the current phrase in the sentence string or list is updated. If the end of the sentence has been reached, the process return 180.

The process of resolving ambiguities is substantially identical to the process for identifying query phrases illustrated in Fig. 10. The difference primarily being the rules which are used to disambiguate an ambiguous word. As illustrated in Fig. 10, the current phrase is examined 190, to determine whether it is ambiguous 190. By ambiguous we mean that the word has not been identified as to its relationship and attribute. If the current phrase is still ambiguous, it is disambiguated 192 in accordance with the following rules:

o if _phrase is an AGGREGATE with no object defined

    o ask user to choose which ATTRIBUTE of type) NUMBER is the object

        o if NONE, throw out the AGGREGATE _phrase

        o if chosen, put the defined AGGREGATE _phrase _object onto the parsed sentence

o if _phrase is a LOGICAL (AND)

    o throw out _phrase; ANDs are inherent in prolog

o if _phrase is a LOGICAL (OR)

    o recheck semantic rules for LOGICAL (OR)

o if _phrase is a COMPARISON _sign

    o if the next _phrase2 has an _attribute, _sign2, and a _value defined

        o replace _sign2 with _sign

o if _phrase is part of a list of POSSIBLE phrases

    o present the list to the user and ask user to choose

        o if NONE

            o try to match _phrase with other domain phrases where _phrase is not the first word of the phrase

    o present type list and ask user to choose

        o if NONE, return the UNKNOWN _phrase and FAIL

    o if chosen, reparse the new chosen phrase

        o if ALL, or one or several were chosen

            o reparse with the chosen phrase(s) or all phrases

    o combine the parsed phrases with OR's

o if _phrase is RELATED to several domain areas

    o present the list to the user and ask user to choose the area

        o use A rules

        o if ALL, or one or several were chosen

```
o  reparse with each chosen phrase or all
        phrases
              o  combine each reparsed phrase
                 and the major topic
                 _phrase with an AND
      o  combine each conjunction with OR'S
    o  if _phrase is either a POSSIBLE or RELATED
       phrase and all above rules failed
         o  return UNKNOWN _phrase
```

The above rules in Prolog, except for the comparison sign, are Pretty Print (PP) statements and reads similar to the previously discussed prompts. The code for the Comparison sign appears in Appendix Ig. With this code if the ambiguous phrase is a Comparison sign, and if the next phrase on the _back of the list is a _type (an Attribute or a Sub-Attribute) with a specified _att(ribute), another _sign2, and a _value, then replace that _sign2 with _sign, return the new (_type _att _sign _value), and drop the (Comparison _sign) out of the query.

Once the current phrase is no longer ambiguous, a check is made 194 to determine whether all of the phrases in the query have been examined for ambiguities. Once again, this occurs when the end of the list or string is reached. If not the next phrase becomes 196 the current phrase and the loop continues. If the end of the query has been reached, a return 198 occurs.

Once the ambiguities are resolved, it is possible that some words will still remain unknown. Fig. 11 illustrates the process used to resolve unknown words. First the user is prompted 210 to determine which of four possible ways of resolving any unknown word is appropriate. The entire Unknown word section is primarily PPs and reads, and anyone with ordinary skill in Prolog would be able to provide the PPs and reads, however, it is best to organize the code to use windows. Basically, each block of text to be printed to the screen is a window; each window has an identifier which can be a letter or a number and each window can branch to a certain other window(s) according to the user's answer. For example, the "Teach" window (see Fig. 11) is labeled window III and the possible windows it can branch to are windows IV, V or VI, or it can accept a Cancel from the user meaning that "I really didn't want to choose window III so take me back to the window I was on previously". The code to describe the windows and the window branches is set forth in Appendix Ih. Any window not mentioned does not have another branch in the algorithm, i.e., the system has all of the information needed to complete this branch and therefore, no longer has to ask the user more questions. Window VII actually includes 3 other branches, windows, IX, X, XI which are not shown in Fig. 11. These windows simply ask the user if he wants to see the domain related words, the field names (Attributes), or the Synonyms, in which the appropriate vocabulary is presented. One of ordinary skill in the art can provide the code for these windows.

Now we enter the Unknown algorithm and the code is set forth in Appendix Ii. If there is a misspelled word 12, the user is asked to retype 214 the word. The new word is substituted for the old word in accordance with the code in Appendix Ij. Where Cancel window calls the window that was displayed before the Cancel was requested. The code is set forth in Appendix Ik. After which the query is parsed 216 with a new word.

When parsing, the system is always working with the _current phrase, and there is a _front and a _back of the phrase, corresponding to what came before _current in the phrase and what comes after _current in the phrase. The system always works from left to right and is finished with the algorithm when the _back is the empty list, i.e., no more phrases to check. The _new word defined in the UNKNOWN word algorithm is always returned as the head of the _back of the phrase - or as the next phrase on the rest of the list to still yet to be checked. Remember, any new word/phrase defined is a change to the original sentence and we will be going back to flowchart block 148 of Fig. 8 which says to reparse the entire sentence until the starting sentence is the same as the ending sentence.

If it is necessary to teach 218 the new word, the user is asked whether the word is an instance 220 of something, a synonym 222 of something or a verb 224. Code which would accomplish this interaction, assuming that the word is identified as a verb is set forth on Appendix Il. Three menu items are given to the user to choose from in the code. To respond Verb, the user types in the number 3 or the 3rd item on the list. Remember, the menu rule prints the menu item number and then the item. The above call would produce...

Is _word a new

1. Instance of an attribute
2. Synonym
3. Verb

Enter a number or type CANCEL to cancel: _

The code for choosing a Verb is now window 6 and is set forth in Appendix lm.

Based on the answers provided by the user the new fact is added 226 to the knowledge base (by the ADDCL of the above-referenced code and the SAVE primitive for storage in a file) after which the query is reparsed with the new fact.

If it is necessary to view 228 the new vocabulary the vocabulary is listed 230 for the user after a return occurs to the prompts of the user. If the user responds that the word is unimportant 232, the word is added 234 to the knowledge base as a weed and removed from the query and the process continues 236.

To provide the user with helpful hints after the abbreviated database has been examined, the process of Fig. 12 is followed. First, the number of entries matching all the criteria are indicated to the user after which the system chooses 252 the most important criteria for a partial match search. The most important criteria is the first criteria in the query that has an attribute that is a "stand alone" attribute (see Fig. 4A). A stand alone attribute is a key attribute that can be queried by itself and does not have to rely on any other attribute to make the query sensible. The system calls the clause 'most-important-rule' with the first argument being the list of criteria, and it is returned to it the most important rule in the second argument. The code is as in Appendix ln.

If there is no criteria specified that has that "stand alone" attribute, then the most important criteria is the first criteria specified in the query. Once the criteria for a partial match search are determined, a reduced query is produced which is used to search for a partial match. The total number of entries that match the most important criteria are printed 256. The number of courses which match the next criteria on the list can be printed 262 using rule code similar to that set out above. That is, each of the criteria in the query is used alone to search the database to provide additional information to the user. The printing of the number of entries which match the various criteria continues until all of the criteria have been examined 266 after which the helpful hint portion ends 268.

As an example of the process discussed above assume that the user asks the system "What did alamo publish?" with the general purpose database in Fig. 3 and the domain or specialized database of Fig. 4 being used by the process. First, the process formulates the query in the format associated with a list stored in PROLOG as illustrated below:

(What Did Alamo Publish?)

The process then examines the entire phrase in the list and compares the phrase to the database of Fig. 3 in an attempt to find the largest phrase which will match. The system discovers that "what" is a select word and substitutes (Identifier (Word)) for the word being located as illustrated below:

((Select (What)) Did Alamo Publish)

Next the process, using the dictionary of Fig. 3, discovers, after trying to match "did alamo publish", that "did" is a weed whereupon the word did is removed from the list with the result as indicated below:

((Select (What)) Alamo Publish)

Next the system examines the phrase "alamo publish" and discovers that IT does not match anything in the dictionaries exactly but that alamo could be part of a multiple word phrase. "Alamo" is replaced by all of the possible multiple word phrases that it could be, in this case, there is only one, and the query looks like:

```
((Select (What)) (Possible
(Alamo)((Instance Of (Alamo
Learning Systems)))) Publish)
```

If the user had asked "What did alamo learning systems publish" the process would examine "alamo learning systems publish" and identify "alamo learning systems" leaving "publish" to be examined. In either event, the process examines the word "publish" and discovers that it is not an ambiguous word but that it is an unknown word. The system then substitutes an unknown attribute definition for the word as illustrated below:

```
((Select (What)) (Possible (Alamo) ((Instance
of (Alamo Learning Systems))) (Unknown
(Publish)))
```

The system, once all possible query parts have been identified, moves onto resolve ambiguities. The above query is examined by looking at the first query (Select(What)) and discovering that it is not ambiguous, the next criteria begins with possible and is ambiguous. The system then asks the user for clarification and indicates to the user that the best guess is "alamo learning systems". When the user verifies the best guess the query will look like:

```
((Select (What)) (Attribute (Author)
(=) (Alamo Learning Systems))
(Unknown(Publish)))).
```

After (Unknown(publish)) is examined and found unambiguous, the query remains as above.

The system then moves on to resolve any unknown words. Each criteria is examined until (Unknown-(publish)) is encountered. Then the system, as illustrated in Fig. 11, requests the user to indicate whether the word should be retyped, whether the definition of the word should be taught, whether the vocabulary should be listed or whether the word publish is not an important word. When the user selects the teach mode, the system asks the user to identify whether the word publish is an instance of, a synonym or verb. After the user identifies that the word is a verb the system requests the user to identify which of the entries (catalog number, title, user, skill level, topic, learning time, prize, author, computer) are doing the action and which of the entries is receiving the action. If the user identifies the author as doing the action and the title as receiving the action the system will create a new database fact ((Is-A(Publish) Verb (Author) (Title))) for the domain database of Fig. 4 and add it to the database using the rule code (ADDCL((Is-A(Publish)Verb(Author)(Title))))

The system will then substitute for the unknown word publish as illustrated below:

```
((Select (What)) (Attribute (Author)
(=) (Alamo Learning Systems)) (Verb
(Publish) (Author) (Title))
```

The system moves on to block 148 and discovers the starting query
    (What Did Alamo Publish)
is not the same as the final query listed above. Therefore, the system goes through the entire loop (blocks 142, 144, 146, 148) again using the final query as the new starting query.

The system starts with identifying the (Select (What)) which remains the same. The next phrase, the (Attribute (Author)...) also remains the same since it is a well-defined criteria specification and no Attribute rules were fired. The identified (Verb...) is not well-defined and the first Verb rule listed on page 22 fires and succeeds. Following through that rule, there is only one doer/receiver pair, the ((Author) (Title)) since the user just taught the system the verb PUBLISH. Therefore, the pair is put onto the list which now looks like

```
((Select (What)) (Attribute (Author)
(=) (Alamo Learning Systems))
(Attribute (Author)) (Attribute
(Title)))
```

and the system continues identifying query parts at this point.

The system is now checking the semantics at (Attribute (Author)) and finds that the third Attribute rule fires here since Author was better described before in the criteria (Attribute (Author) (=) (Alamo Learning Systems)). Therefore, we remove this phrase as the rule states and we now have

```
((Select (What)) (Attribute (Author)    (=)
(Alamo Learning Systems))  (Attribute (Title)
```

We now move on to (Attribute (Title)) and find that no rules fire on this criteria so it is left in the list and block 142 of this round is finished. The rules of blocks 144 and 146 do not fire and we find again that starting query

```
((Select (What)) (Attribute (Author) (=)
(Alamo Learning System) (Verb (Publish)
((Author) (Title))))
```

and the final query

```
((Select (What)) (Attribute (Author) (=)
(Alamo Learning System) (Attribute (Title)))
```

are not the same.

The system loops around again and this time, the rules of all of the blocks 142, 144 and 146 do not fire. Therefore, the starting and final queries are the same and we can move onto block 150.

At this point the query is completely identified and the query will be reformulated into a format suitable for the target data management program. Every QUERY has two parts, SELECT words and criteria that must be satisfied. The select words are the specific attributes of a course that are selected to be shown to the user when courses are found in the database that match the criteria. They become a sort of reference point for the user to compare courses.

The select words can be selected by the user in his input

(What is the Price of...)

or there can be default select words listed in the domain dictionary (see Fig. 4B.). These defaults are attributes that should be shown to the user whether he specifies them or not. In our application of computer based training courses, we have one default, the Catalog Number. Therefore, in continuing with our example, the query would now look like

```
((Query ((Catalog Number) (Title)
(Author)) ((Attribute (Author) (=)        (Alamo
Learning Systems)))))
```

The Catalog Number comes strictly from the default. The Title is added to the select list because it was mentioned in the user input. The Author is also added because it is a criteria mentioned by the user. Remember, the select list is only a list of the attributes to be shown to the user after all of the specified criteria are met. Therefore, when searching the abbreviated database one would get the response of 3 courses matching: Catalog Number 1, 2 and 3. The user would just not be shown the titles of these courses since the abbreviated database doesn't know them.

The actual output could look like:

3 courses matched all of the criteria specified:

Catalog Number : 1

Author : Alamo Learning Systems

Catalog Number : 2

Author : Alamo Learning Systems

Catalog Number : 3

Author : Alamo Learning Systems

If the query produced by the system was more complicated such as:

```
((Query ((Catalog Number)
(Title)(Author)(Price)( Material)) ((Attribute
(Author) (=) (Alamo Learning Systems))
(Attribute (Price) (<)(1000))


(Attribute(Material)(=)(Videodisc)))))
```

A query of the mainframe database by the system would produce the following responses in accordance with Fig. 12:

1) how many courses matched all 3 criteria (block 250)

2) (Author would be the most important criteria because it is the first Stand-Alone mentioned in the criteria list) (block 252) how many other courses were authored by Alamo Learning Systems (block 256)

3) how many courses were authored by Alamo...And the Price < 1000 (block 262)

4) how many courses were authored by Alamo...And the Price was Not < 1000 (block 264)

5) how many courses were authored by Alamo...And the Material = Videodisc (block 262)

6) how many courses were authored by Alamo...And the Material ≠ Videodisc (block 264) The actual output would look like the following (using Fig. 6A, 6B and 6C):

1 course matches all three criteria : (step 1 of above)

Catalog Number : 3

Title : The Planner

Author : Alamo Learning Systems

Material : Videodisc

However,

2 other courses have Author = Alamo Learning Systems (step 2)

2 of these courses have Price < 1000 (step 3)

0 of these courses have Material = Videodisc (step 5)

1 of these courses has Material = Cassettes (step 6)

1 of these courses has Material = Workbook, Diskette (also step 6)

Notice that step 4 does not produce any output in this example because there were no courses of the 2 from step 2 in which the PRICE criteria failed. Notice also that block 264 does not just print the number of courses not matching this criteria, but it splits those courses up into groups of what the failing attribute does match.

An alternative to producing plural queries is to require that the database manager program break up the query into queries for each of the criteria listed in the query. From the information produced as a result of the various queries, the user may decide to edit the query or produce a new query.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly, all suitable modifications and equivalents may be resorted to, falling within the scope of the invention.

## Claims

1. An intelligent query system method for a system having a mainframe database (26), a mainframe database manager (24) for the mainframe database (26), an abbreviated database (22), and a database manager (20) for the abbreviated database, said method characterized by the steps of:

(a) parsing (106) an input query and identifying one or more phrases in the query to produce an identified phrase query;

(b) applying (112) the identified phrase query to the database manager (20);

(c) applying (120) the identical phrase query to the mainframe database manager (24) if requested by the user; and

(d) providing (114 and 122) search results to the user.

2. A method as recited in claim 1, characterized by step (a) including the steps of:

(a1) searching (142) a general word database (16) and a domain database (18) to identify a phrase in the input query using phrase identification rules;

(a2) resolving (144) ambiguities of an ambiguous phrase using phrase replacement rules; and

(a3) prompting (146) the user for definition of an unrecognized phrase and entering the definition in the domain database (118).

3. A method as recited in claim 2, characterized by step (a1) including checking (174) the semantics of a current phrase using semantic checking rules.

4. A method as recited in claim 2, characterized by step (a2) including:

(i) providing (192) a partial match to the user between the ambiguous phrase and the contents of the general word and domain databases (16 and 18); and

(ii) responding (192) to a user response indicating coincidence between the ambiguous phrase and the partial match by substituting the partial match for the ambiguous phrase.

5. A method as recited in claim 1, characterized by step (d) including providing (256) partial match results to the user.

6. A method as recited in claim 1, characterized by step (d) including providing (114 and 122) search results to the user after steps (b) and (c).

7. A method as recited in claim 1 characterized by step (a) including the steps of:

(a1) searching (142) a general word database (16) and a domain database (18) to identify a phrase in the input query using phrase identification rules including checking (174) the semantics of a current phrase using semantic checking rules;

(a2) resolving (144) ambiguities of an ambiguous phrase using phrase replacement rules including the steps of:

(i) providing (192) a partial match to the user between the ambiguous phrase and the contents of the general word and domain databases (16 and 18); and

(ii) responding (192) to a user response indicating coincidence between the ambiguous phrase and the partial match by substituting the partial match for the ambiguous phrase; and

(a3) prompting (146) the user for definition of an unrecognized phrase and entering the definition in the domain database.

8. An intelligent query system coupled to a mainframe computer system (10) including a mainframe database manager (24) for conducting a search of a mainframe database (26), and a microcomputer system (12) coupled to the mainframe computer system (10), characterized by said microcomputer system including:

an abbreviated database (22) which is an abbreviation of the mainframe database;

database manager means (20) for searching said abbreviated database with a search query;

a general phrase dictionary database (16);

a domain dictionary database (198); and

query analysis means (14) for using the general (16) and domain (18) dictionary databases to identify one or more phrases in an input query to produce the search query, applying the search query to said database manager means (20), applying the search query to said mainframe database manager (24) if requested by a user and providing the results to the user.

9. A system as recited in claim 8, characterized by said query analysis means including an expert system (Fig. 10) for resolving phrase ambiguities and prompting of unknown phrases.

FIG. 1.

FIG. 2A.

FIG. 2B.

FIG. 2C.

((IS-A (COUNT) SELECT))
((IS-A (FIND) SELECT))
((IS-A (LIST) SELECT))
((IS-A (WHAT) SELECT))
((IS-A (WHICH) SELECT))
((IS-A (WHO) SELECT))


((PERSON (WHO)))


((IS-A (AVG) AGGREGATE))
((IS-A (MAX) AGGREGATE))
((IS-A (MIN) AGGREGATE))
((IS-A (SUM) AGGREGATE))


((IS-A (=) COMPARISON))
((IS-A (<) COMPARISON))
((IS-A (<=) COMPARISON))
((IS-A (>) COMPARISON))
((IS-A (>=) COMPARISON))


((IS-A (AND) LOGICAL))
((IS-A (OR) LOGICAL))
((IS-A (NOT) LOGICAL))


((IS-A (ABOVE) PREP (" > ")))
((IS-A (AFTER) PREP (" > ")))
((IS-A (BEFORE) PREP (" < ")))
((IS-A (BELOW) PREP (" < ")))
((IS-A (BY) PREP (=)))
((IS-A (FOR) PREP (=)))
((IS-A (LIKE) PREP (=)))
((IS-A (OF) PREP (=)))
((IS-A (ON) PREP (=)))
((IS-A (WITH) PREP (=)))

((IS-A (A) WEED))
((IS-A (AS) WEED))
((IS-A (COULD) WEED))
((IS-A (DID) WEED))
((IS-A (DOES) WEED))


((TRANSITION (.)))
((TRANSITION (?)))
((TRANSITION (ON THE OTHER HAND)))
((TRANSITION (OTHERWISE)))
((TRANSITION (THEREFORE)))


((CONTRACTION (CAN'T) (CAN NOT)))
((CONTRACTION (DON'T) (DO NOT)))
((CONTRACTION (ISN'T) (IS NOT)))


((SYNONYM (HOW MANY) (COUNT)))
((SYNONYM (CHEAPEST) (MIN)))
((SYNONYM (LARGEST) (MAX)))
((SYNONYM (TOTAL) (SUM)))
((SYNONYM (EXCEEDS) (" > ")))
((SYNONYM (MORE THAN) (" > ")))


((NICKNAME (&) (AND)))
((NICKNAME (-) (NOT)))


((NICKNAME (LESS THAN) (" < ")))
((NICKNAME (GREATER THAN) (" > ")))


# FIG. 3.

((GENERIC (COURSE)))
((GENERIC (DATABASE)))
((GENERIC (TRAIN)))

((IS-A (CATALOG NUMBER) ATTRIBUTE))
((IS-A (TITLE) ATTRIBUTE))
((IS-A (AUDIENCE) ATTRIBUTE))
((IS-A (USER) SUB-ATTRIBUTE))
((IS-A (SKILL LEVEL) SUB-ATTRIBUTE))
((IS-A (TOPIC) ATTRIBUTE))
((IS-A (STRATEGY) ATTRIBUTE))
((IS-A (MATERIAL) ATTRIBUTE))
((IS-A (LEARNING TIME) ATTRIBUTE))
((IS-A (TIME) SUB-ATTRIBUTE))
((IS-A (UNITS) SUB-ATTRIBUTE))
((IS-A (PRICE) ATTRIBUTE))
((IS-A (AUTHOR) ATTRIBUTE))
((IS-A (COMPUTER) ATTRIBUTE))
((IS-A (OPERATING SYSTEM) ATTRIBUTE))

((STAND-ALONE (CATALOG NUMBER)))
((STAND-ALONE (TITLE)))
((STAND-ALONE (AUDIENCE)))
((STAND-ALONE (USER)))
((STAND-ALONE (TOPIC)))
((STAND-ALONE (AUTHOR)))

# FIG. 4A.

((IS-A (PUBLISHED BY) VERB (TITLE) (AUTHOR)))
((IS-A (WRITTEN BY) VERB (TITLE) (AUTHOR)))
((IS-A (USE) VERB (AUDIENCE) (COURSE)))
((IS-A (USE) VERB (COURSE) (STRATEGY)))
((IS-A (USE) VERB (COURSE) (MATERIAL)))
((IS-A (COST) VERB (COURSE) (PRICE)))
((IS-A (RUN ON) VERB (COURSE) (COMPUTER)))

```
((MEANING (CATALOG NUMBER)
        (A UNIQUE NUMBER ASSIGNED EACH COURSE FOR
          IDENTIFICATION PURPOSES)
((MEANING (TITLE) (THE TITLE OF THE COURSE))
((MEANING (AUDIENCE) (THE TYPE OF USER THAT COURSE IS
  DESIGNED FOR)))


((PERSON (AUDIENCE)))
((PERSON (USER)))
((PERSON (AUTHOR)))


((TYPE (CATALOG NUMBER) NUM UNIQUE SELECT))
((TYPE (TITLE) TEXT UNIQUE))
((TYPE (AUDIENCE) ((USER) (SKILL LEVEL)) MULTIPLE))
((TYPE (USER) TEXT UNIQUE))
((TYPE (SKILL LEVEL) TEXT MULTIPLE))
((TYPE (TOPIC) TEXT MULTIPLE))
((TYPE (STRATEGY) TEXT MULTIPLE))
((TYPE (MATERIAL) TEXT MULTIPLE))
((TYPE (LEARNING TIME) ((TIME) (UNITS)) UNIQUE))
((TYPE (TIME) NUM UNIQUE))
((TYPE (UNITS) TEXT UNIQUE))
((TYPE (PRICE) NUM UNIQUE))
((TYPE (AUTHOR) TEXT UNIQUE))
((TYPE (COMPUTER) TEXT MULTIPLE))
((TYPE (OPERATING SYSTEM) TEXT MULTIPLE))


((SYNONYM (CATEGORY) (TOPIC)))
((SYNONYM (SUBJECT) (TOPIC)))
((SYNONYM (EXPERIENCE) (SKILL)))
```

# FIG. 4B.

—CONTINUED FROM FIG. 4B.

((NICKNAME (IBM-PC/AT) (IBM PC AT)))
((NICKNAME (RANDOM ACCESS MEMORY) (RAM)))
((NICKNAME (DISK OPERATING SYSTEM) (DOS)))

((INFERS ($) (PRICE)))
((INFERS (DOLLARS) (PRICE)))

((INSTANCE-OF (THE PROGRAM SOLVER) (TITLE)))
((INSTANCE-OF (MANAGERS) (USER)))
((INSTANCE-OF (BEGINNER) (SKILL LEVEL)))
((INSTANCE-OF (INTERMEDIATE) (SKILL LEVEL)))
((INSTANCE.-OF (EXPERIENCED) (SKILL LEVEL)))
((INSTANCE-OF (APPLE IIE) (COMPUTER)))
((INSTANCE-OF (ALAMO LEARNING SYSTEMS) (AUTHOR)))

((RELATED-TO (CAUSE ANALYSIS) (MANAGEMENT)))
((RELATED-TO (PROBLEM SOLVING) (MANAGEMENT)))
((RELATED-TO (MANAGEMENT) (TOPIC)))
((RELATED-TO (DECISION MAKING) (MANAGEMENT)
    (HUMAN RESOURCES)))
((RELATED-TO (EVALUATING ALTERNATIVES) (MANAGEMENT)))
((RELATED-TO (CAREER OPTIONS) (HUMAN RESOURCES)))
((RELATED-TO (GOALS) (HUMAN RESOURCES)))
((RELATED-TO (DEVELOPMENT) (HUMAN RESOURCES)))
((RELATED-TO (ASSESSMENT) (HUMAN RESOURCES)))
((RELATED-TO (TAKING ACTION) (HUMAN RESOURCES)))

# FIG. 4C.

| CATALOG NUMBER | TOPIC | PRICE |
|---|---|---|
| 1 | MANAGEMENT<br>CAUSE ANALYSIS<br>PROBLEM SOLVING | $525 |
| 2 | MANAGEMENT<br>DECISION MAKING<br>EVALUATING ALTERNATIVES | $687 |
| 3 | MANAGEMENT<br>PLANNING<br>ANALYSIS | $125 |
| 4 | PROGRAMMING SKILLS<br>ADA PROGRAM STRUCTURE | $250 |
| 5 | HUMAN RESOURCES<br>CAREER OPTIONS<br>GOALS<br>DECISION MAKING<br>TAKING ACTION | $890 |
| 6 | MAINTENANCE<br>RELAY LOGIC<br>TROUBLE-SHOOTING<br>FAULT TRACKING<br>SYMPTOM PATTERN ANALYSIS | $150 |
| 7 | MANAGEMENT<br>GANTT CHARTS<br>DEPENDENCY NETWORKS<br>SPREADSHEETS | $300 |
| 8 | PERSONAL COMPUTING<br>WINDOWS<br>SPREADSHEETS<br>GRAPHS<br>COMMUNICATIONS<br>DATABASES | $499 |

CONTINUED ON
FIG. 5B.

FIG. 5A.

| AUTHOR | COMPUTER |
|---|---|
| ALAMO LEARNING SYSTEMS | IBM PC XT<br>IBM PC XT<br>IBM PC COMPATIBLES |
| ALAMO LEARNING SYSTEMS | IBM PC<br>IBM PC XT |
| ALAMO LEARNING SYSTEMS | IBM PC XT |
| ALSYS INCOR. | APPLE II<br>APPLE II PLUS |
| THE AMERICAN COLLEGE<br>TESTING PROGRAM | DEC LSI II |
| APPLIED SCIENCE ASSOCIATED<br>INCORPORATED | TRS 80 MODEL I<br>TRS 80 MODEL II<br>TRS 80 MODEL III |
| APPLIED BUSINESS TECHNOLOGY<br>CORPORATION | IBM PC XT<br>IBM PC XT<br>IBM PC COMPATIBLES |
| ARTHRU YOUNG BUSINESS<br>SYSTEMS | IBM PC<br>IBM PC COMPATIBLES |

CONTINUED FROM
FIG. 5A.

FIG. 5B.

| CATALOG NUMBER | TITLE | AUDIENCE: USER |
|---|---|---|
| 1 | THE PROBLEM SOLVER | MANAGERS |
| 2 | THE DECISION MAKER | MANAGERS |
| 3 | THE PLANNER | MANAGERS |
| 4 | LESSONS ON ADA | COMPUTER PROGRAMMERS |
| 5 | DISCOVER | EMPLOYEES |
| 6 | RELAY LOGIC | MAINTENANCE EMPLOYEES |
| 7 | PROJECT MANAGER WORKBENCH | MANAGERS |
| 8 | SYMPHONY: A VIDEO AND INTRODOUCTION | EMPLOYEES |

FIG. 6A.

0 287 310

| SKILL LEVEL | TOPIC | STRATEGY |
|---|---|---|
| BEGINNER INTERMEDIATE EXPERIENCED | MANAGEMENT CAUSE ANALYSIS PROBLEM SOLVING | VIDEO |
| BEGINNER INTERMEDIATE EXPERIENCED | MANAGEMENT DECISION MAKING EVALUATING ALTERNATIVES | VIDEO |
| BEGINNER INTERMEDIATE EXPERIENCED | MANAGEMENT PLANNING ANALYSIS | VIDEO |
| EXPERIENCED | PROGRAMMING SKILLS ADA PROGRAM STRUCTURE | STRUCTURED |
| BEGINNER INTERMEDIATE EXPERIENCED | HUMAN RESOURCES CAREER OPTIONS GOALS DECISION MAKING TAKING ACTION | TUTORIAL |
| BEGINNER INTERMEDIATE EXPERIENCED | MAINTENANCE RELAY LOGIC TROUBLE-SHOOTING FAULT TRACKING SYMPTOM PATTERN ANALYSIS | VIDEO SIMULATION |
| BEGINNER INTERMEDIATE EXPERIENCED | MANAGEMENT GANTT CHARTS DEPENDENCY NETWORKS SPREADSHEETS | TUTORIAL |
| BEGINNER INTERMEDIATE EXPERIENCED | PERSONAL COMPUTING WINDOWS SPREADSHEETS GRAPHS COMMUNICATIONS DATABASES | VIDEO SIMULATION |

CONTINUED FROM FIG. 6A.

CONTINUED ON FIG. 6C.

FIG. 6B.

| MATERIAL | LEARNING TIME | PRICE |
|---|---|---|
| CASSETTES | 4 HOURS | $525 |
| WORKBOOK DISKETTE | 8 HOURS | $687 |
| VIDEODISC | 2 DAYS | $125 |
| WORKBOOK CASSETTES | 7 HOURS | $250 |
| DISKETTE | 2 DAYS | $890 |
| VIDEOTAPE WORKBOOK | 8 HOURS | $150 |
| WORKBOOK DISKETTE | 8 HOURS | $300 |
| VIDEODISC VIDEOTAPE | 9 HOURS | $499 |

## FIG. 6C.

| AUTHOR | COMPUTER | OPERATING SYSTEMS |
|---|---|---|
| ALAMO LEARNING SYSTEMS | IBM PC XT<br>IBM PC XT<br>IBM PC COMPATIBLES | CPM<br>CPM 86<br>MS DOS<br>PC DOS |
| ALAMO LEARNING SYSTEMS | IBM PC<br>IBM PC XT | CPM<br>CPM 86<br>MS DOS<br>PC DOS |
| ALAMO LEARNING SYSTEMS | IBM PC XT | CPM<br>CPM 86<br>MS DOS<br>PC DOS |
| ALSYS INCOR | APPLE II<br>APPLE II PLUS | APPLE DOS |
| THE AMERICAN COLLEGE TESTING PROGRAM | DEC LSI II | |
| APPLIED SCIENCE ASSOCIATED INCORPORATED | TRS 80 MODEL I<br>TRS 80 MODEL II<br>TRS 80 MODEL III | TRSDOS |
| APPLIED BUSINESS TECHNOLOGY CORPORATION | IBM. PC XT<br>IBM PC XT<br>IBM PC COMPATIBLES | PC DOS |
| ARTHRU YOUNG BUSINESS SYSTEMS | IBM PC<br>IBM PC COMPATIBLES | PC DOS |

CONTINUED FROM FIG. 6C.

## FIG. 6D.

```
                    ┌──────────────────────┐      ╱ 100
                    │        START         │─────╱
                    └──────────────────────┘

  102                          │
   ╲   ┌──────────────────────┐│
    ╲──│  PROMPT FOR USER INPUT│◄──────────────────┐
       └──────────────────────┘                    │
  104                │                              │
   ╲   ┌──────────────────────┐                    │
    ╲──│    SPLIT USER INPUT   │                    │
       │  INTO SEPARATE QUERIES │                    │
       │   AT TRANSITION WORDS  │                    │
       └──────────────────────┘                    │
  106                │                              │
   ╲   ┌──────────────────────┐    (SEE FIG. 8.)    │
    ╲──│     PARSE QUERIES     │                    │
       └──────────────────────┘                    │
  108                │                              │
   ╲   ┌──────────────────────┐                    │
    ╲──│  IS THIS A CONTINUATION│                    │
       │  OF A PREVIOUS QUERY   │                    │
       │           ?           │                    │
       └──────────────────────┘                    │
          │ YES        │ NO                         │
          │            │                            │
          │   ┌──────────────────┐   ╱ 110          │
          │   │   DOES USER      │──╱               │
          │   │  VERIFY QUERY    │                  │
          │   │       ?          │                  │
          │   └──────────────────┘                  │
          │      YES  │    NO │                      │
          └──────────┤        └──────────────────────┤
  112                │                              │
   ╲   ┌──────────────────────┐                    │
    ╲──│  QUERY THE ABBREVIATED │                    │
       │      DATABASE          │                    │
       └──────────────────────┘                    │
                     │                              │
                    ( F )                          ( G )
```

# FIG. 7A.

(F)                                    (G)

114 ⟍  SHOW USER THE          (SEE FIG. 12.)
        RESULTS GIVING HELPFUL
               HINTS

116 ⟍  DOES USER WISH
        TO EDIT QUERY
               ?

          NO              YES

118 ⟍  DOES USER WISH
        TO SUBMIT QUERY
        TO MAINFRAME
               ?

          NO              YES

                    SUBMIT TO        ⟍ 120
                    MAINFRAME

                    SHOW USER        ⟍ 122
                    RESULTS

124 ⟍     ANOTHER QUERY
               ?

          NO              YES

126 ⟍         END

# FIG.  7B.

FIG. 8.

FIG. 9.

IS CURRENT STILL AMBIGUOUS ? — 190

NO    YES

DISAMBIGUATE — 192

QUERY COMPLETE ? — 194

NO    YES

196 — CURRENT = NEXT PHRASE

RETURN — 198

FIG. 10.

ASK USER:
IS THIS UNKNOWN WORD MISSPELLED,
DO YOU WISH TO TEACH ME_ WORD,
DO YOU WISH TO VIEW MY VOCABULARY,
OR _ WORD IS UNIMPORTANT - MOVE ON ?
( WINDOW I )

210

212 MISSPELLED WORD ( WINDOW II )

214 RETYPE WORD ( WINDOW II )

216 REPARSE WITH NEW WORD

218 TEACH ( WINDOW III )

220 INSTANCE OF ( WINDOW IV )

222 SYNONYM ( WINDOW V )

224 VERB ( WINDOW VI )

226 ADD NEW FACT TO KNOWLEDGE BASE

228 VIEW VOCABULARY ( WINDOW VII )

230 PRESENT ALPHABETIZED VOCABULARY TO USER

232 WORD IS UNIMPORTANT ( WINDOW VIII )

234 ADD WORD TO KNOWLEDGE BASE AS A WEED

236 CONTINUE

FIG. 11.

0 287 310

```
          ┌─────────────────────────────────────┐
          │  PRINT THE NUMBER OF ENTRIES        │── 250
          │  MATCHING ALL CRITERIA SPECIFIED    │
          └─────────────────────────────────────┘
                           │
          ┌─────────────────────────────────────┐
          │  SYSTEM CHOOSES WHAT IT THINKS IS   │── 252
          │  THE USER MOST IMPORTANT CRITERIA   │
          └─────────────────────────────────────┘
                           │
          ┌─────────────────────────────────────┐
          │  FROM THE LIST OF ENTRIES THAT DIDN'T│── 254
          │  MATCH ALL OF THE CRITERIA BUT      │
          │  MATCHED AT LEAST ONE CRITERIA      │
          └─────────────────────────────────────┘
                           │
          ┌─────────────────────────────────────┐
          │  PRINT THE TOTAL NUMBER OF ENTRIES  │── 256
          │  THAT MATCH THIS MOST IMPORTANT     │
          │  CRITERIA                           │
          └─────────────────────────────────────┘
                           │
          ┌─────────────────────────────────────┐
          │  FROM THE LIST OF ENTRIES THAT MATCH│── 258
          │  THIS MOST IMPORTANT CRITERIA BUT   │
          │  DON'T MATCH ALL CRITERIA           │
          └─────────────────────────────────────┘
                           │
          ┌─────────────────────────────────────┐
          │  CHOOSE THE NEXT CRITERIA-2         │── 260
          └─────────────────────────────────────┘
                           │
          ┌─────────────────────────────────────┐
          │  PRINT THE NUMBER OF ENTRIES        │── 262
          │  THAT MATCHED CRITERIA-2            │
          └─────────────────────────────────────┘
                           │
          ┌─────────────────────────────────────┐
          │  PRINT THE NUMBER OF ENTRIES        │── 264
          │  THAT DID NOT MATCH CRITERIA-2      │
          └─────────────────────────────────────┘
                           │
          ┌─────────────────────────────────────┐
          │  MORE CRITERIA                      │── 266
          │  ?                                  │
          └─────────────────────────────────────┘
              YES │        │ NO
          ┌─────────────────────────────────────┐
          │  END                                │── 268
          └─────────────────────────────────────┘
```

FIG. 12.